(19) Europäisches Patentamt
European Patent Office
Office européen des brevets

(11) EP 1 707 579 A1

(12) EUROPEAN PATENT APPLICATION
published in accordance with Art. 158(3) EPC

(43) Date of publication:
04.10.2006 Bulletin 2006/40

(21) Application number: 04820516.5

(22) Date of filing: 03.12.2004

(51) Int Cl.:
*C08F 8/08* (2006.01) *G03G 9/08* (2006.01)

(86) International application number:
PCT/JP2004/018012

(87) International publication number:
WO 2005/058981 (30.06.2005 Gazette 2005/26)

(84) Designated Contracting States:
DE FR GB

(30) Priority: 17.12.2003 JP 2003419576

(71) Applicant: Mitsui Chemicals, Inc.
Tokyo 105-7117 (JP)

(72) Inventors:
- UOSAKI, Hirotaka, c/o Mitsui Chemicals, Inc., Sodegaura-shi, Chiba 2990265 (JP)
- TOYODA, Hideo, c/o Mitsui Chemicals, Inc., Tokyo 1057117 (JP)
- YORIHIRO, Kunihiko, c/o Mitsui Chemicals, Inc., Sodegaura-shi, Chiba 2990265 (JP)

(74) Representative: HOFFMANN EITLE
Patent- und Rechtsanwälte
Arabellastrasse 4
81925 München (DE)

# (54) EPOXIDIZED LOW-MOLECULAR-WEIGHT ETHYLENE POLYMER, MOLD-RELEASING AGENT FOR ELECTROPHOTOGRAPHIC TONER, AND ELECTROPHOTOGRAPHIC TONER FOR DEVELOPING ELECTROSTATIC IMAGE

(57) [PROBLEMS] The present invention provides a modifier for an electrophotographic toner which is excellent in adhesiveness with various inks, coating materials, aluminum or other metals, or the like, a release agent of the electrophotographic toner, and a modified electrophotographic toner.

[MEANS FOR SOLVING PROBLEMS] A release agent for an electrophotographic toner, which comprises an epoxidized low-molecular-weight ethylene polymer (B) which contains an epoxy group in the polymer chain of a low-molecular-weight ethylene polymer (A), and has (i) a density of 870 to 1,050 kg/$m^3$, (ii) a melting point of 70 to 130°C, and (iii) a number-average molecular weight (Mn) of 400 to 5,000, and a modified low-molecular-weight ethylene compound (C) obtained from the epoxidized low-molecular-weight ethylene polymer (B) and a carboxylic acid compound; and an electrophotographic toner for developing an electrostatic charge image, which comprises the modified low-molecular-weight ethylene compound (C).

EP 1 707 579 A1

## Description

### TECHNICAL FIELD

The present invention relates to an epoxidized low-molecular-weight ethylene polymer which is obtained by introducing an epoxy group into a polymer containing an olefinically unsaturated bond in the polymer chain and more specifically to an epoxidized low-molecular-weight ethylene polymer which is excellent in adhesiveness, printability, compatibility in the polymer blend, or the like.

Further, the present invention relates to a release agent for an electrophotographic toner for developing an electrostatic charge image in the electrophotography, the electrostatic printing, or the like, and to an electrophotographic toner.

### BACKGROUND ART

Since the ethylene polymer has a non-polar molecular structure, and is poor in affinity with other materials, attempts have been conventionally made to introduce various functional groups into the polymer. Among the functional groups, the epoxy group has high reactivity, and rapidly reacts with various functional groups such as a hydroxy group, an amino group, a carboxyl group, an acid anhydride, an acid halide group, an ester group, a halogenated hydrocarbon, a mercapto group and an isocyanato group, to form the corresponding chemical bond, thereby it being very useful. The reactivity with the above functional groups can be used to improve adhesiveness with a polyolefin and other materials, printability, compatibility in the polymer blend, or the like.

Until now, as one example reporting that an epoxy group is introduced into an ethylene polymer, there is a liquid, epoxidized, modified ethylene random copolymer as described in JP-B No. 7-91338. However, the epoxy product obtained by the method is effective in the applications which make use of the characteristics that the epoxy product is liquid, but the epoxy product has no practical mechanical strength as a molded article, thereby the use area being limited.

On the other hand, JP-A No. 2001-2731 discloses an oxygen modified product of an ethylene polymer having the mechanical strength, but it does not disclose any epoxy product.

Further, JP-A No. 2003-73412 proposes an oxygen modified product of a low-molecular-weight ethylene polymer made by an epoxidizing agent, wherein it comprises (1) 81 to 100 mol% of a structural unit derived from ethylene, and 0 to 19 mol% of a structural unit derived from $\alpha$-olefin; (2) it has a weight-average molecular weight (Mw), as measured by GPC, of 7000 or less, (3) it has a molecular weight distribution (Mw/Mn) satisfying the relationship: $1.1 \leq Mw/Mn \leq 2.5$, and (4) it has a vinyl or vinylidene group at the end of the main chain of the polymer, and the content of these groups as measured by $^1$H-NMR, is 90% or more based on the total one ends. In this method, the epoxy group is only present at the end of the main chain of the polymer, and further the number of the epoxy groups per one molecule in the polymer chain is at most no more that 1 per one molecule, thereby there still being a problem in the molecular design.

With the progress of office automation, the demand for copiers or printers using electrophotography has increased rapidly, and also the performance requirements for such the equipments have become higher. In general, as an electrophotography process in a copier or a printer, a process (heat roll fixing process) which comprises forming an electrostatic latent image on a photoconductor, sequentially developing the latent image using a toner, transferring the toner image on a sheet to be fixed, such as a paper, and then heat-pressing the image with a heat roll, is carried out. In this heat roll fixing process, a toner with good fixing property, which is capable of being fixed at lower temperatures is desired from the viewpoint of the improvement on the economy in the power consumption, etc., the increase in a copying speed, the prevention of curl of a copying paper, etc., or the like, is desired. On the other hand, in the heat roll fixing process, there occurs a problem that since the surface of the heat roll and the toner in a melt state are in contact with each other, a toner is adhered and transferred to the surface of a heat roll, and then re-transferred to a next sheet to be fixed to stain the sheet, which is called an offset phenomenon. It is one of the important requirements for the toner performance to avoid this offset phenomenon. Furthermore, as the speed of a copier or printer becomes higher, higher performance of the electrically charged portion is also increasingly desired. In other words, it is necessary that a toner should have a higher degree of durability, and long term stability against printing.

To meet such the demands, proposals have been conventionally made on improved molecular weights or molecular weight distributions of a binder resin for a toner. Specifically, attempts have been made to provide a binder resin with low-molecular-weights and to lower its fixing temperature. However, the melting point is lowered by providing the resin with the low-molecular-weights, but at the same time a cohesive power is also reduced, thereby leading to an offset phenomenon on the fixing roll. In order to prevent this problem, a method of using a binder resin obtained by mixing a high-molecular-weight resin and a low-molecular-weight resin to make the molecular weight distribution broader, a method of further crosslinking the high-molecular-weight portion of the binder resin, or the like, is carried out. However, in this method, the viscosity of the resin increases, while it becomes difficult to satisfy the fixing property.

As a binder resin for a toner which uses the above-described technique, generally a styrene-acrylic resin, a

polyester resin, a polyol resin, or the like may be mainly used.

However, by these methods, sufficient effects cannot be obtained with high speed copiers and small size copiers in which heat capacity from a heat fixing roll is hard to be sufficiently transmitted. In other words, for the purpose of preventing an offset phenomenon, when a high weight-average molecular weight resin or a cross-linked resin is employed, the viscosity of the resin becomes high, and thus the fixing property of the resin becomes deteriorated.

To achieve such the demand, there is a method of adding a paraffin wax, a low-molecular-weight polyolefin, or the like as a release agent to a toner. When using a styrenic binder resin, the technologies as described in JP-A No. 49-65232, or the like are disclosed. However, the offset phenomenon was improved, while the blocking resistance was deteriorated, or the development property became deteriorated. Further, it was confirmed that in the case of a polyester resin, even though the same release agent as above was applied, there was little effect, and when the amount to be used was increased, the developer was rapidly deteriorated. As for such the toner, a large part of the polyolefin wax is exposed on the surface of a toner particle. For this reason, polyolefin is released from the toner particle and easily transferred to the development roll, the photoconductor, the carrier, or the like and thus these are easily contaminated, thereby causing a problem that reliability as a developer is decreased. Further, as for the toner by means of a mixing method, the dispersion state of the release agent such as, for example, polyolefin, is hardly controlled.

Under these circumstances, JP-A No. 56-87051 discloses a process for preparing a toner, which comprises polymerization in the presence of a release agent. However, such the release agent is used as uniformly dispersed in the polymerizable monomers used in the preparation of a polymerization toner, but the high-molecular-weight olefinic release agent is hard to disperse. On the other hand, a release agent such as low-molecular-weight paraffin is heated and dissolved in the monomers, and uniformly dispersed, however it becomes difficult to stably prepare a droplet of the monomer with the toner particle size. Thus, these various problems become serious in the polymerization toner with a smaller particle size.

In addition, as for a means for preparing a toner in which the shape and surface composition of a particle is intentionally controlled, an emulsion polymerization coagulation process is disclosed in JP-A Nos. 63-282749 and 6-250439. However, when a release agent is internally added in the emulsion polymerization coagulation process, if the particle size of the release agent is too small, fixing is ineffective, while on the contrary, if the particle size of the release agent is too big, it is exposed to the surface of the toner, thereby the powdery characteristics being deteriorated by heat or pressure. Further, there is a problem that if the particle size of the release agent is large, the particles of the release agent are not included within the agglomerated particles in the agglomeration step, or fell off in the fusion step.

As such, in order to provide a developer which has sufficient fixing property or offset property and further is capable of providing a high-resolution copying image, it is necessary that the above-described developer should be provided with the electrophotography characteristics. Until now, various techniques have been attempted in order to promote the high-resolution or high-precision of the copied image, but a means could not been achieved, which can improve, in particular, the above-described all disadvantages.

[Patent Document 1] JP-B No. 7-91338
[Patent Document 2] JP-A No. 2001-2731
[Patent Document 3] JP-A No. 2003-73412
[Patent Document 4] JP-A No. 49-65232
[Patent Document 5] JP-A No. 56-87051
[Patent Document 6] JP-A No. 63-282749
[Patent Document 7] JP-A No. 6-250439

## DISCLOSURE OF THE INVENTION

## PROBLEMS TO BE SOLVED BY THE INVENTION

It is an object of the present invention which has solved the above problems to provide a modifier for an electrophotographic toner which is excellent in adhesiveness with various inks, coating materials, aluminum or other metals, or the like and a release agent of the electrophotographic toner, and a modified electrophotographic toner.

## MEANS FOR SOLVING THE PROBLEMS

Specifically, the present invention relates to:

a release agent for an electrophotographic toner, which comprises an epoxidized low-molecular-weight ethylene polymer (B) which contains an epoxy group in the polymer chain of a low-molecular-weight ethylene polymer (A), and has

(i) a density of 870 to 1,050 kg/$m^3$,
(ii) a melting point of 70 to 130°C, and
(iii) a number-average molecular weight (Mn) of 400 to 5,000, and a modified low-molecular-weight ethylene compound (C) obtained from the epoxidized low-molecular-weight ethylene polymer (B) and a carboxylic acid compound; and an electrophotographic toner for developing an electrostatic charge image, which comprises the modified low-molecular-weight ethylene compound (C).

## EFFECTS OF THE INVENTION

The epoxidized low-molecular-weight ethylene polymer according to the present invention contains a highly reactive epoxy group within the molecule, and thus has various characteristics such as excellent adhesiveness with various inks, painting materials, aluminum or other metals, or the like. Further, the epoxidized low-molecular-weight ethylene polymer according to the present invention can be designed within a broader range of the epoxy group content, and thus can be easily subjected to molecular design satisfying the required performances according to the applications.
In addition, the low-molecular-weight ethylene polymer as a raw material does not employ an expensive monomer, and also in the modification of epoxidization, if limiting the method therefor, is economically excellent.
The release agent for a toner and the toner of the present invention have the constitution as described above, and thus the fixing property, the offset resistance, and the development durability are excellent.
Therefore, the release agent for a toner and the toner of the present invention can respond sufficiently to the requirements which have recently increased, such as a higher speed, a low-temperature fixing property, or the like of a copier and a printer.

## BEST MODE FOR CARRYING OUT THE INVENTION

Hereinbelow, the present invention will be explained in detail.

(Low-molecular-weight ethylene polymer (A))

Examples of the olefins used for the preparation of the low-molecular-weight ethylene polymer (A) include at least one olefin selected from ethylene, and/or an α-olefin having 3 to 12 carbon atoms. The α-olefins having 3 to 12 carbon atoms include propylene, 1-butene, 1-pentene, 3-methyl-1-butene, 1-hexene, 4-methyl-1-pentene, 3-methyl-1-pentene, 1-octene, 1-decene, 1-dodecene, or the like, preferably an α-olefin having 3 to 10 carbon atoms, more preferably an α-olefin having 3 to 8 carbon atoms, and particularly preferably propylene, 1-butene, 1-hexene, or 4-methyl-1-pentene.
Examples of the dienes include butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidene norbornene, vinylnorbornene, dicyclopentadiene, 2-methyl-1,4-hexadiene, 2-methyl-1,6-octadiene, 7-methyl-1,6-octadiene, 4-ethylidene-8-methyl-1,7-nonadiene, 5,9-dimethyl-1,4,8-decatriene, or the like.
Among these, vinylnorbornene, ethylidene norbornene, dicyclopentadiene, 1,4-hexadiene, butadiene, isoprene, 2-methyl-1,4-hexadiene, or 2-methyl-1,6-octadiene is preferred.
In addition, examples of the non-conjugated dienes include ethylidenenorbornene, tetrahydroindene, vinylnorbornene, 5-methylene-2-norbornene, dicyclopentadiene, tetrahydroindene, methyl tetrahydroindene, bicyclo-(2,2,1)-hepta-2,5-diene, 5-propenyl-2-norbornene, 5-(4-cyclopentenyl)-2-norbornene, 5-cyclohexylidene-2-norbornene, or the like.
The low-molecular-weight ethylene polymer (A) can be obtained by the copolymerization of the above-described olefin and diene, but the low-molecular-weight ethylene polymer (A) is preferably a copolymer of ethylene and diene, or a copolymer of ethylene, at least one α-olefin having 3 to 12 carbon atoms and diene.
The low-molecular-weight ethylene polymer (A) according to the present invention is preferably one obtained by the copolymerization of an olefin and diene using a metallocene catalyst as described below.
The low-molecular-weight ethylene polymer (A) contain usually 0.01 to 4.0 mol%, preferably 0.01 to 2.0 mol%, and more preferably 0.1 to 0.7 mol% of the structural units derived from diene.
When the low-molecular-weight ethylene polymer (A) contains the structural unit derived from diene in a proportion within the above range, a modified low-molecular-weight ethylene polymer (C) with suitably high polymerization activity and good releasability as a release agent for a toner can be obtained.
When the low-molecular-weight ethylene polymer (A) is an ethylene copolymer, the structural unit derived from ethylene is preferably contained in a proportion in the range of usually 80 to 99 mol%, preferably 86 to 99 mol%, and more preferably 90 to 99 mol%. When the low-molecular-weight ethylene polymer (A) is an ethylene copolymer, and the structural unit derived from ethylene is within the above range, a modified low-molecular-weight ethylene polymer (C) with good releasability as a release agent for a toner can be obtained.

The low-molecular-weight ethylene polymer (A) preferably has an unsaturated group content in the range of usually 0.1 to 4.0/molecule on an average, preferably 0.1 to 3.0/molecule, and more preferably 1.0 to 2.0/molecule.

If the low-molecular-weight ethylene polymer (A) preferably has an unsaturated group content within the above range, an epoxy group can be contained in all the low-molecular-weight ethylene polymer (A), whereby the effects being achieved even with a small amount of the low-molecular-weight ethylene polymer (A).

In addition, the unsaturated group content in the low-molecular-weight ethylene polymer (A) is measured as follows.

It is measured by comparing a peak area of carbons in the unsaturated part with the peak area of total carbons by means of $^{13}$C-NMR. From this, the number of the unsaturated groups per 1,000 carbons, M can be obtained. The unsaturated group content per one molecule can be obtained from [number-average molecular weight (Mn)]$\times$M/14,000. The number of the unsaturated groups per 1,000 carbons, M is preferably 1.4 to 140, more preferably 2.8 to 35, and even more preferably 4 to 30.

The low-molecular-weight ethylene polymer (A) has a density, as measured by a density gradient tube method, in the range of 870 to 970 kg/m$^3$, preferably 870 to 950 kg/m$^3$, even more preferably, 870 to 920 kg/m$^3$, and still even more preferably 880 to 920 kg/m$^3$.

When the low-molecular-weight ethylene polymer (A) has a density within the above range, a modified low-molecular-weight ethylene polymer (C) with good releasability as a release agent for a toner can be obtained.

The low-molecular-weight ethylene polymer (A) preferably has a melting point, as measured by a differential scanning calorimeter (DSC), in the range of 70°C to 140°C, more preferably 80 to 120°C, and even more preferably 90 to 110°C.

When the low-molecular-weight ethylene polymer (A) has a melting point within the above range, a modified low-molecular-weight ethylene polymer (C) with good releasability as a release agent for a toner can be obtained.

The low-molecular-weight ethylene polymer (A) preferably has an intrinsic viscosity [η], as measured in decalin at 135°C, in the range of usually 0.04 to 0.47 dl · g$^{-1}$, more preferably 0.05 to 0.47 dl · g$^{-1}$, even more preferably 0.07 to 0.20 dl · g$^{-1}$, and still even more preferably 0.10 to 0.18 dl · g$^{-1}$.

When the low-molecular-weight ethylene polymer (A) has an intrinsic viscosity [η], as measured in decalin at 135°C, within the above range, a modified low-molecular-weight ethylene polymer (C) with good releasability as a release agent for a toner can be obtained.

The low-molecular-weight ethylene polymer (A) preferably has a number-average molecular weight (Mn), as measured by gel permeation chromatography (GPC), in the range of 400 to 4,500, preferably 800 to 4,500, more preferably 1,000 to 3,000, and even more preferably 1,500 to 2,500.

When the low-molecular-weight ethylene polymer (A) has a number-average molecular weight (Mn) within the above range, a modified low-molecular-weight ethylene polymer (C) with good releasability as a release agent for a toner can be obtained.

The low-molecular-weight ethylene polymer (A) preferably has a molecular weight distribution (Mw/Mn), as measured by GPC, of usually 4.5 or less, preferably Mw/Mn of 4.0 or less, and more preferably 3.5 or less. In addition, the lower limit of the molecular weight distributions is 1.0.

Further, each of the weight-average molecular weight (Mw) and the number-average molecular weight (Mn) is a value in terms of polystyrene by gel permeation chromatography (GPC), and measurement by GPC is performed under the conditions: a temperature: 140°C, and a solvent: o-dichlorobenzene.

The low-molecular-weight ethylene polymer (A) preferably has a penetration of usually 15 dmm or less, preferably 10 dmm or less, more preferably 3 dmm or less, and even more preferably 1 dmm or less. Penetration can be measured in accordance with JIS K2207.

When the low-molecular-weight ethylene polymer (A) has a penetration within the above range, a modified low-molecular-weight ethylene polymer (C) with suitable rigidity as a release agent for a toner can be obtained.

The above-described low-molecular-weight ethylene polymer (A) can be prepared by using a metallocene-based catalyst as described below comprising a metallocene compound of transition metals selected from Group IV in the periodic table, an organoaluminumoxy compound and/or an ionized ionic compound.

(Metallocene compound)

The metallocene compound which forms the metallocene-based catalyst is a metallocene compound of transition metals selected from Group IV in the periodic table and specific examples thereof include those which are represented by the following formula (1):

$$M^1L_x \qquad (1)$$

wherein $M^1$ represents a transition metal selected from Group IV in the periodic table, x represents the valence of the

transition metal $M^2$, and L represents a ligand. Examples of the transition metal represented by $M^1$ include zirconium, titanium, hafnium, and the like. L represents a ligand coordinated to the transition metal $M^1$,
wherein at least one L is a ligand having a cyclopentadienyl skeleton and this ligand having a cyclopentadienyl skeleton may have a substituent. The ligand having a cyclopentadienyl skeleton, L includes, for example, an alkyl- or cycloalkyl-substituted cyclopentadienyl group such as a cyclopentadienyl group, a methylcyclopentadienyl group, an ethylcyclopentadienyl group, an n- or i-propylcyclopentadienyl group, an n-, i-, sec- or t-butylcyclopentadienyl group, a dimethylcyclopentadienyl group, a methylpropylcyclopentadienyl group, a methylbutylcyclopentadienyl group, and a methylbenzylcyclopentadienyl group; and an indenyl group, a 4,5,6,7-tetrahydroindenyl group, a fluorenyl group, and the like. Hydrogen in the ligand having a cyclopentadienyl skeleton may be substituted with a halogen atom, trialkylsilyl group, or the like.

When the metallocene compound comprises at least two ligands having a cyclopentadienyl skeleton as a ligand L, two ligands of these ligands having a cyclopentadienyl skeleton may be bonded with each other through an alkylene group such as ethylene and propylene; a substituted alkylene group such as isopropylidene and diphenylmethylene; a silylene group or a substituted silylene group such as dimethylsilylene group, a diphenylsilylene group and a methylphenylsilylene group.

Examples of the ligands other than the ligands having a cyclopentadienyl skeleton (ligands containing no cyclopentadienyl skeleton) L include a hydrocarbon group having 1 to 12 carbon atoms, an alkoxy group, an aryloxy group, a sulfonic acid containing group ($-SO_3R^1$), a halogen atom or a hydrogen atom (wherein $R^1$ is an alkyl group, an alkyl group substituted with a halogen atom, an aryl group, an aryl group substituted with a halogen atom, or an aryl group substituted with an alkyl group), and the like.

(Example - 1 of metallocene compound)

The metallocene compound represented by the above formula (1), when the valence of the transition metal is, for example, 4, is represented more specifically by the following formula (2):

$$R^2_k R^3_1 R^4_m R^5_n M^1 \qquad (2)$$

wherein $M^1$ represents a transition metal selected from Group IV in the periodic table, $R^2$ represents a group (ligand) having a cyclopentadienyl skeleton, $R^3$, $R^4$ and $R^5$ each independently represent a group (ligand) which has or does not have a cyclopentadienyl skeleton, k denotes an integer of 1 or more, and k + l + m + n = 4.

Examples of the metallocene compound in which $M^1$ is zirconium and at least two ligands having a cyclopentadienyl skeleton are coordinated include the followings:

bis(cyclopentadienyl)zirconium monochloride monohydride,
bis(cyclopentadienyl)zirconium dichloride, bis(1-methyl-3-butylcyclopentadienyl) zirconium
bis(trifluoromethanesulfonate), bis(1,3-dimethylcyclopentadienyl)zirconium dichloride, and the like.

Among these compounds, the compounds substituted a 1,3-substituted cyclopentadienyl group with a 1,2-substituted cyclopentadienyl group may be also used.

Further, as other examples of the metallocene compound, use may be made of the bridge type metallocene compound in which in the above formula (2), at least two of $R^2$, $R^3$, $R^4$ and $R^5$, for example, $R^2$ and $R^3$ are groups (ligands) having a cyclopentadienyl skeleton, and these two groups are bonded to each other via an alkylene group, a substituted alkylene group, a silylene group or a substituted silylene group. In this case, $R^4$ and $R^5$ are each independently the same as ligands L other than the ligands having a cyclopentadienyl skeleton as described above.

Examples of the bridge type metallocene compound include ethylenebis(indenyl)dimethyl zirconium, ethylenebis(indenyl)zirconium dichloride, isopropylidene(cyclopentadienyl-fluorenyl)zirconium dichloride, diphenylsilylenebis (indenyl)zirconium dichloride, methylphenylsilylenebis(indenyl)zirconium dichloride, and the like.

(Example - 2 of metallocene compound)

Examples of the metallocene compound include the metallocene compounds represented by the following formula (3) as described in JP-A No. 4-268307.

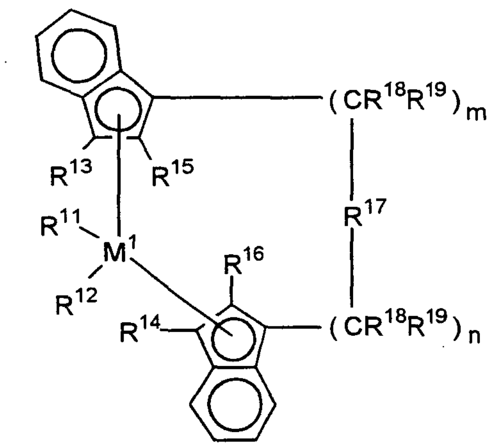

··· (3)

wherein $M^1$ represents a transition metal belonging to Group IV in the periodic table, and specifically titanium, zirconium or hafnium.

$R^{11}$ and $R^{12}$ may be the same or different from each other, and each represent a hydrogen atom; an alkyl group having 1 to 10 carbon atoms; an alkoxy group having 1 to 10 carbon atoms; an aryl group having 6 to 10 carbon atoms; an aryloxy group having 6 to 10 carbon atoms; an alkenyl group having 2 to 10 carbon atoms; an arylalkyl group having 7 to 40 carbon atoms; an alkylaryl group having 7 to 40 carbon atoms; an arylalkenyl group having 8 to 40 carbon atoms; or a halogen atom. $R^{11}$ and $R^{12}$ are preferably chlorine atoms.

$R^{13}$ and $R^{14}$ may be the same or different from each other, and each represent a hydrogen atom; a halogen atom; an alkyl group having 1 to 10 carbon atoms, which may be halogenated; an aryl group having 6 to 10 carbon atoms; or a $-N(R^{20})_2$, $-SR^{20}$, $-OSi(R^{20})_3$, $-Si(R^{20})_3$ or $-P(R^{20})_2$ group.

Herein, $R^{20}$ is a halogen atom, and preferably a chlorine atom; an alkyl group having 1 to 10 carbon atoms, and preferably 1 to 3 carbon atoms; or an aryl group of 6 to 10 carbon atoms, and preferably 6 to 8 carbon atoms. $R^{13}$ and $R^{14}$ are particularly preferably a hydrogen atom.

$R^{15}$ and $R^{16}$ may be the same as $R^{13}$ and $R^{14}$ except that they do not contain a hydrogen atom, and they may be the same or different from each other, and preferably the same. $R^{15}$ and $R^{16}$ may be preferably each an alkyl group having 1 to 4 carbon atoms, which may be halogenated, and specifically methyl, ethyl, propyl, isopropyl, butyl, isobutyl, trifluoromethyl, or the like, and particularly preferably methyl.

In the above formula (3), $R^{17}$ is selected from the group consisting of the followings:

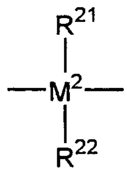 、 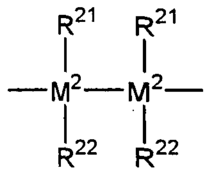 、 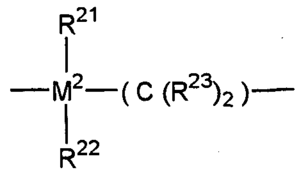 、

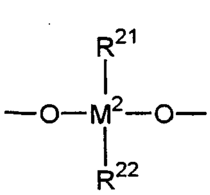 、 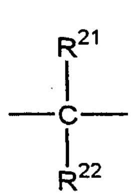 、 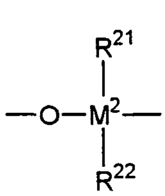 、

$=BR^{21}$, $=AlR^{21}$, -Ge, -Sn-, -O-, -S-, =SO-, $=SO_2$, $=NR^{21}$, =CO, $=PR^{21}$, $=P(O)R^{21}$, and the like. $M^2$ is silicon, germanium or tin, and preferably silicon or germanium. Herein, $R^{21}$, $R^{22}$ and $R^{23}$ may be the same or different from each other, and each represent a hydrogen atom; a halogen atom; an alkyl group having 1 to 10 carbon atoms; a fluoroalkyl group having 1 to 10 carbon atoms; an aryl group having 6 to 10 carbon atoms; a fluoroaryl group having 6 to 10 carbon atoms; an alkoxy group having 1 to 10 carbon atoms; an alkenyl group having 2 to 10 carbon atoms; an arylalkyl group having 7 to 40 carbon atoms; an arylalkenyl group having 8 to 40 carbon atoms; or an alkylaryl group having 7 to 40 carbon atoms. "$R^{21}$ and $R^{22}$" or "$R^{21}$ and $R^{23}$" may form a ring together with the atom to which they are bonded. $R^{17}$ is preferably

$=CR^{21}R^{22}$, $=SiR^{21}R^{22}$, $=GeR^{21}R^{22}$, -O-, -S-, =SO, $=PR^{21}$ or $=P(O)R^{21}$. $R^{18}$ and $R^{19}$ may be the same or different from each other, and also may be the same as $R^{21}$. m and n may be the same or different from each other, and each represent 0, 1 or 2, and preferably 0 or 1, and m + n is 0, 1 or 2, and preferably 0 or 1.

Examples of the metallocene compound represented by the formula (3) include the followings: rac-ethylene(2-methyl-1-indenyl)$_2$-zirconium dichloride, rac-dimethylsilylene(2-methyl-1-indenyl)$_2$-zirconium dichloride, or the like. These metallocene compounds can be prepared, for example, by the process as described in JP-A No. 4-268307.

(Example - 3 of metallocene compound)

As the metallocene compound, the metallocene compounds represented by the following formula (4) can be also used.

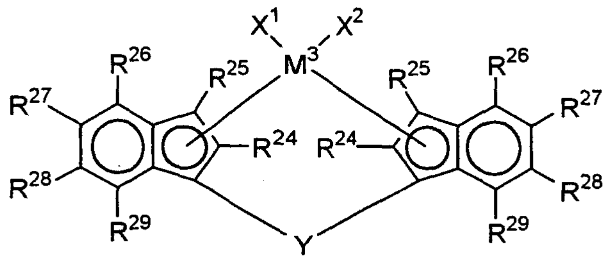

··· (4)

In the formula (4), $M^3$ represents a transition metal atom belonging to Group IV in the periodic table, and specifically titanium, zirconium, hafnium, or the like. $R^{24}$ and $R^{25}$ may be the same or different from each other, and each represent a hydrogen atom; a halogen atom, a hydrocarbon group having 1 to 20 carbon atoms, a halogenated hydrocarbon group having 1 to 20 carbon atoms, or a silicon-containing, oxygen-containing, sulfur-containing, nitrogen-containing or phosphorus-containing group. $R^{24}$ is preferably a hydrocarbon group, and particularly preferably an alkyl group having to 3 carbon atoms such as methyl, ethyl or propyl. $R^{25}$ is preferably a hydrogen atom or a hydrocarbon group, and particularly preferably a hydrogen atom or an alkyl group having 1 to 3 carbon atoms such as methyl, ethyl or propyl. $R^{26}$, $R^{27}$, $R^{28}$, and $R^{29}$ may be the same or different from each other, and each represent a hydrogen atom; a halogen atom; a hydrocarbon group having 1 to 20 carbon atoms; or a halogenated hydrocarbon group having 1 to 20 carbon atoms, and preferably a hydrogen atom, a hydrocarbon group, or a halogenated hydrocarbon group. At least one of the pairs of $R^{26}$ and $R^{27}$, $R^{27}$ and $R^{28}$, and $R^{28}$ and $R^{29}$ may form a monocyclic aromatic ring together with the carbon atoms to which they are bonded. Further, in addition to a group forming an aromatic ring, when the hydrocarbon group or halogenated hydrocarbon group exists two or more, they may be bonded to each other to be a cyclic form. Furthermore, when $R^{29}$ is a substituent other than an aromatic group, it is preferably a hydrogen atom. $X^1$ and $X^2$ may be the same or different from each other, and each represent a hydrogen atom; a halogen atom; a hydrocarbon group having 1 to 20 carbon atoms; a halogenated hydrocarbon group having 1 to 20 carbon atoms; or an oxygen- or sulfur-containing group. Y is a divalent hydrocarbon group having 1 to 20 carbon atoms; a divalent halogenated hydrocarbon group having 1 to 20 carbon atoms; a divalent silicon-containing group; a divalent germanium-containing group; a divalent tin-containing group; or -O-, -CO-, -S-, -SO-, $-SO_2-$, $-NR^{30}-$, $-P(R^{30})-$, $-P(O)(R^{30})-$, $-BR^{30}-$ or $-AlR^{30}-$ (wherein $R^{30}$ is a hydrogen atom, a halogen atom, a hydrocarbon group having 1 to 20 carbon atoms, or a halogenated hydrocarbon group having 1 to 20 carbon atoms).

In the formula (4), examples of the ligands coordinated to $M^3$, which contain the monocyclic aromatic ring which is formed by at least one of the pairs of $R^{26}$ and $R^{27}$, $R^{27}$ and $R^{28}$, and $R^{28}$ and $R^{29}$ bonded to each other, include those represented by the following formulae:

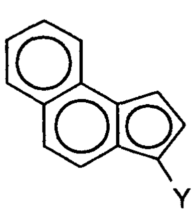

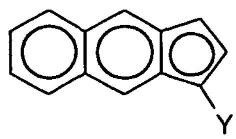

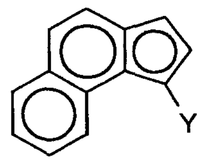

(wherein Y has the same meaning as in the above formula.)

(Example - 4 of metallocene compound)

As the metallocene compound, the metallocene compounds represented by the following formula (5) can be also used.

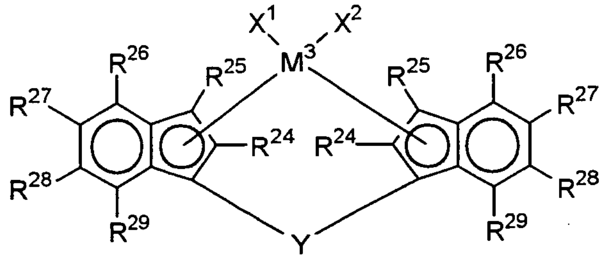

... (5)

In the formula (5), $M^3$, $R^{24}$, $R^{25}$, $R^{26}$, $R^{27}$, $R^{28}$ and $R^{29}$ are the same as in the above formula (4). Among $R^{26}$, $R^{27}$, $R^{28}$ and $R^{29}$, two groups including $R^{26}$, are preferably alkyl groups, and preferably $R^{26}$ and $R^{28}$, or $R^{28}$ and $R^{29}$ are alkyl groups. The above alkyl group is preferably a secondary or tertiary alkyl group, and may be substituted with a halogen atom or a silicon-containing group. Examples of the halogen atom or the silicon-containing group include the substituents as described in the $R^{24}$ and $R^{25}$. Each of $R^{26}$, $R^{27}$ $R^{28}$ and $R^{29}$ is preferably a hydrogen atom, when it is not an alkyl group. Further, two groups selected from $R^{26}$, $R^{27}$, $R^{28}$ and $R^{29}$ may be bonded to each other to form a monocyclic or polycyclic ring other than an aromatic ring. The halogen atom includes the same as $R^{24}$ and $R^{25}$. $X^1$, $X^2$ and Y include those as exemplified above.

Specific examples of the metallocene compound represented by the above formula (5) include the followings: rac-dimethylsilylene-bis(4,7-dimethyl-1-indenyl)zirconium dichloride, rac-dimethylsilylene-bis(2,4,7-trimethyl-1-indenyl) zirconium dichloride, and rac-dimethylsilylene-bis(2,4,6-trimethyl-1-indenyl)zirconium dichloride, or the like.

As for the above compounds, a transition metal compound having its zirconium metal substituted with a titanium metal or a hafnium metal can be also used. The transition metal compound can be used as usually a racemic body, but can be also used as an R- or S-body.

(Example -5 of metallocene compound)

As the metallocene compound, the metallocene compounds represented by the following formula (6) can be also used.

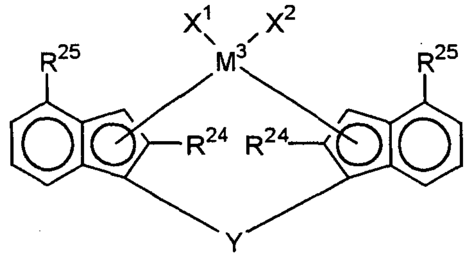

... (6)

In the formula (6), $M^3$, $R^{24}$, $X^1$, $X^2$ and Y are the same as in the above formula (4). $R^{24}$ is preferably a hydrocarbon group, and particularly preferably an alkyl group having 1 to 4 carbon atoms, such as methyl, ethyl, propyl or butyl. $R^{25}$ represents an aryl group having 6 to 16 carbon atoms. $R^{25}$ is preferably a phenyl group or a naphthyl group. These aryl groups may be substituted with a halogen atom; a hydrocarbon group having 1 to 20 carbon atoms or a halogenated hydrocarbon group having 1 to 20 carbon atoms. $X^1$ and $X^2$ are preferably a halogen atom or a hydrocarbon group having 1 to 20 carbon atoms.

Specific examples of these metallocene compound represented by the above formula (6) include the followings: rac-dimethylsilylene-bis(4-phenyl-1-indenyl)zirconium dichloride, rac-dimethylsilylene-bis(2-methyl-4-phenyl-1-indenyl) zirconium dichloride, rac-dimethylsilylene-bis(2-methyl-4-(α-naphthyl)-1-indenyl)zirconium dichloride, rac-dimethylsilylene-bis(2-methyl-4-(β-naphthyl)-1-indenyl)zirconium dichloride, and rac-dimethylsilylene-bis(2-methyl-4-(1-anthryl)-1-indenyl)zirconium dichloride. As for the above compounds, a transition metal compound having its zirconium metal substituted with a titanium metal or a hafnium metal can be also used.

(Example - 6 of metallocene compound)

As the metallocene compound, the metallocene compounds represented by the following formula (7) can be also used.

$$LaM^4X^3_2 \qquad (7)$$

wherein $M^4$ is a Group IV metal or a metal of lanthanide series in the periodic table; $L^a$ is a derivative of non-localized $\pi$ bonding group, which imparts a constrained geometric shape to the active site of the metal $M^4$; and $X^3$'s may be the same or different from each other, and each represent a hydrogen atom, a halogen atom, a hydrocarbon group having 20 or less carbon atoms, a silyl group having 20 or less silicon atoms, or a germyl group having 20 or less germanium atoms.

Among thee compounds, the compound represented by the formula (8) is preferable.

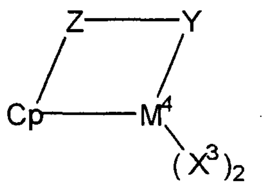

... (8)

In the formula (8), $M^4$ is titanium, zirconium or hafnium; $X^3$ is the same as in the above formula (7); Cp is a substituted cyclopentadienyl group with a substituent Z and bonded to $M^4$ through the $\pi$ bonding; Z is oxygen, sulfur, boron or a Group IV element in the periodic table (e.g., silicon, germanium or tin); and Y is a ligand containing nitrogen, phosphorus, oxygen or sulfur, wherein Z and Y together may form a condensed ring. Specific examples of these metallocene compound represented by the formula (8) include the followings: (dimethyl(t-butylamide)(tetramethyl-$\eta^5$-cyclopentadienyl)silane)titanium dichloride, ((t-butylamide)(tetramethyl-$\eta^5$-cyclopentadienyl)-1,2-ethanediyl)titanium dichloride, or the like. As for the above compounds, a compound having its titanium substituted with zirconium or hafnium can be exemplified.

(Example - 7 of metallocene compound)

As the metallocene compound, the metallocene compounds represented by the following formula (9) can be also used.

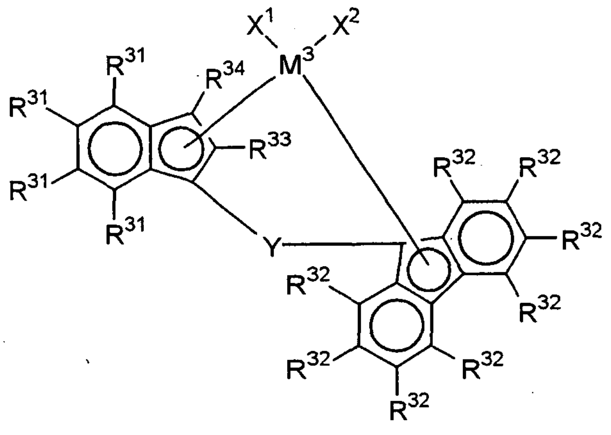

... (9)

In the formula (9), $M^3$ is a transition metal atom belonging to Group IV in the periodic table, and specifically titanium, zirconium or hafnium, and preferably zirconium. $R^{31}$'s may be the same or different from each other, and at least one of them is an aryl group having 11 to 20 carbon atoms; an arylalkyl group having 12 to 40 carbon atoms, an arylalkenyl group having 13 to 40 carbon atoms, an alkylaryl group having 12 to 40 carbon atoms, or a silicon-containing group; or at least two adjacent $R^{31}$'s form a single or plural aromatic or aliphatic rings together with the carbon atoms to which they are bonded. In this case, the ring formed by $R^{31}$'s has 4 to 20 carbon atoms as a whole, including the

carbon atoms to which $R^{31}$'s are bonded. $R^{31}$'s other than $R^{31}$'s which form an aryl group, an arylalkyl group, an arylalkenyl group, an alkylaryl group, or an aromatic or aliphatic ring is a hydrogen atom, a halogen atom, an alkyl group having 1 to 10 carbon atoms, or a silicon-containing group. $R^{32}$'s may be the same or different from each other, and each represent a hydrogen atom; a halogen atom; an alkyl group having 1 to 10 carbon atoms; an aryl group having 6 to 20 carbon atoms; an alkenyl group having 2 to 10 carbon atoms; an arylalkyl group having 7 to 40 carbon atoms; an arylalkenyl group having 8 to 40 carbon atoms; an alkylaryl group having 7 to 40 carbon atoms; or a silicon-, oxygen-, sulfur-, nitrogen- or phosphorus-containing group. Among the groups represented by $R^{32}$, at least two adjacent groups may form a single or plural aromatic or aliphatic rings together with the carbon atoms to which they are bonded. In this case, the ring formed by $R^{32}$' s has 4 to 20 carbon atoms as a whole, including the carbon atoms to which $R^{32}$'s are bonded, and $R^{32}$'s other than $R^{32}$'s which form the aromatic or aliphatic ring is a hydrogen atom, a halogen atom, an alkyl group having 1 to 10 carbon atoms or a silicon-containing group. The groups in which two groups represented by $R^{32}$'s may form a single or plural aromatic or aliphatic rings include those having a fluorenyl group of the following structure.

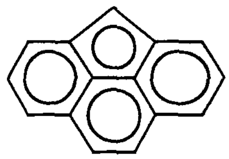

$R^{32}$ is preferably a hydrogen atom or an alkyl group, particularly preferably a hydrogen atom or a hydrocarbon group having 1 to 3 carbon atoms, such as methyl, ethyl and propyl. Preferable examples of the fluorenyl groups having $R^{32}$ as a substituent include a 2,7-dialkyl-fluorenyl group, and in this case, the alkyl groups in the 2,7-dialkyl include an alkyl group having 1 to 5 carbon atoms. $R^{31}$ and $R^{32}$ may be the same or different from each other. $R^{33}$ and $R^{34}$ may be also the same or different from each other, and each represent a hydrogen atom; a halogen atom; an alkyl group having 1 to 10 carbon atoms; an aryl group having 6 to 20 carbon atoms; an alkenyl group having 2 to 10 carbon atoms; an arylalkyl group having 7 to 40 carbon atoms; an arylalkenyl group having 8 to 40 carbon atoms; an alkylaryl group having 7 to 40 carbon atoms; or a silicon-, oxygen-, sulfur-, nitrogen- or phosphorus-containing group, as described above. Among these, at least one of $R^{33}$ and $R^{34}$ is preferably an alkyl group having 1 to 3 carbon atoms. $X^1$ and $X^2$ may be also the same or different from each other, and each represent a hydrogen atom; a halogen atom; a hydrocarbon group having 1 to 20 carbon atoms; a halogenated hydrocarbon group having 1 to 20 carbon atoms; an oxygen-, sulfur- or nitrogen-containing group; or a conjugated diene residue formed by $X^1$ and $X^2$. The conjugated diene residues formed by $X^1$ and $X^2$ preferably include 1,3-butadiene, 2,4-hexadiene, 1-phenyl-1,3-pentadiene and 1,4-diphenylbutadiene, which may be further substituted with a hydrocarbon group having 1 to 10 carbon atoms. $X^1$ and $X^2$ are preferably a halogen atom, hydrocarbon groups having 1 to 20 carbon atoms or sulfur-containing groups. Y is a divalent hydrocarbon group having 1 to 20 carbon atoms; a divalent halogenated hydrocarbon group having 1 to 20 carbon atoms; a divalent silicon-containing group; a divalent germanium-containing group; a divalent tin-containing group; or -O-, -CO-, -S-, -SO-, $-SO_2-$, $-NR^{35}-$, $-P(R^{35})-$, $-P(O)(R^{35})-$, $-BR^{35}-$ or $-AlR^{35}-$ (wherein $R^{35}$ is a hydrogen atom, a halogen atom, a hydrocarbon group having 1 to 20 carbon atoms, or a halogenated hydrocarbon group having 1 to 20 carbon atoms). Among these divalent groups, the shortest bonding section for -Y- is preferably composed of 1 or 2 atoms. Further, $R^{35}$ is a halogen atom, a hydrocarbon group having 1 to 20 carbon atoms or a halogenated hydrocarbon group having 1 to 20 carbon atoms. Y is preferably a divalent hydrocarbon group having 1 to 5 carbon atoms, a divalent silicon-containing group, or a divalent germanium-containing group, more preferably a divalent silicon-containing group, and particularly preferably alkylsilylene, alkylarylsilylene or arylsilylene.

(Example - 8 of metallocene compound)

As the metallocene compound, the metallocene compounds represented by the following formula (10) can be also used.

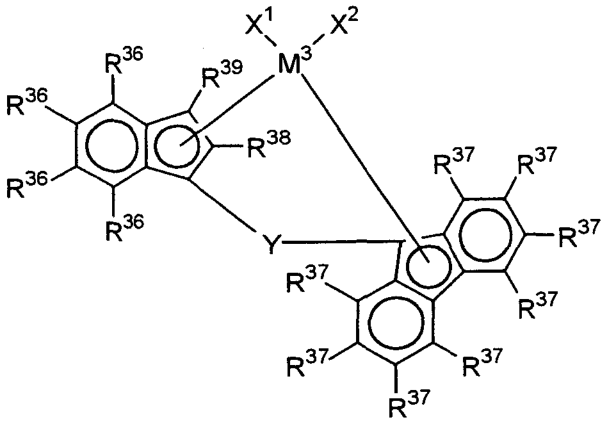

··· (10)

In the formula (10), $M^3$ is a transition metal atom belonging to Group IV in the periodic table, and specifically titanium, zirconium or hafnium, and preferably zirconium. $R^{36}$'s may be the same or different from each other, and each represent a hydrogen atom; a halogen atom; an alkyl group having 1 to 10 carbon atoms; an aryl group having 6 to 10 carbon atoms; an alkenyl group having 2 to 10 carbon atoms; or a silicon-, oxygen-, sulfur-, nitrogen- or phosphorus-containing group. Further, the alkyl group and the alkenyl group may be substituted with a halogen atom. Among these, $R^{36}$ is preferably an alkyl group, an aryl group or a hydrogen atom, and particularly preferably a hydrocarbon group having 1 to 3 carbon atoms such as methyl, ethyl, n-propyl and i-propyl, an aryl group such as phenyl, $\alpha$-naphthyl and $\beta$-naphthyl, or a hydrogen atom. $R^{37}$'s may be the same or different from each other, and each represent a hydrogen atom; a halogen atom; an alkyl group having 1 to 10 carbon atoms; an aryl group having 6 to 20 carbon atoms; an alkenyl group having 2 to 10 carbon atoms; an arylalkyl group having 7 to 40 carbon atoms; an arylalkenyl group having 8 to 40 carbon atoms; an alkylaryl group having 7 to 40 carbon atoms; or a silicon-, oxygen-, sulfur-, nitrogen- or phosphorus-containing group. Further, the alkyl group, the aryl group, the alkenyl group, the arylalkyl group, the arylalkenyl group or the alkylaryl group may be substituted with a halogen atom. Among these, $R^{37}$ is preferably a hydrogen atom or an alkyl group, and particularly preferably a hydrogen atom, or a hydrocarbon group having 1 to 4 carbon atoms, such as methyl, ethyl, n-propyl, i-propyl, n-butyl and tert-butyl. $R^{36}$ and $R^{37}$ may be the same or different from each other. One of $R^{38}$ and $R^{39}$ is an alkyl group having 1 to 5 carbon atoms; and the other is a hydrogen atom; a halogen atom; an alkyl group having 1 to 10 carbon atoms; an alkenyl group having 2 to 10 carbon atoms; or a silicon-, oxygen-, sulfur-, nitrogen- or phosphorus-containing group. It is preferable that among these, one of $R^{38}$ and $R^{39}$ is an alkyl group having 1 to 3 carbon atoms such as methyl, ethyl and propyl; and the other is a hydrogen atom. $X^1$ and $X^2$ may be the same or different from each other, and each represent a hydrogen atom; a halogen atom; a hydrocarbon group having 1 to 20 carbon atoms; a halogenated hydrocarbon group having 1 to 20 carbon atoms; or an oxygen-, sulfur- or nitrogen-containing group; or a conjugated diene residue formed by $X^1$ and $X^2$. Among these, a halogen atom or a hydrocarbon group having 1 to 20 carbon atoms is preferable. Y is a divalent hydrocarbon group having 1 to 20 carbon atoms; a divalent halogenated hydrocarbon group having 1 to 20 carbon atoms; a divalent silicon-containing group; a divalent germanium-containing group; a divalent tin-containing group; or -O-, -CO-, -S-, -SO-, $-SO_2-$ $-NR^{40}-$, $-P(R^{40})-$, $-P(O)(R^{40})-$, $-BR^{40}-$ or $-AlR^{40}-$ (provided that $R^{40}$ is a hydrogen atom, a halogen atom, a hydrocarbon group having 1 to 20 carbon atoms, or a halogenated hydrocarbon group having 1 to 20 carbon atoms). Among these, Y is preferably a divalent hydrocarbon group having 1 to 5 carbon atoms, a divalent silicon-containing group, or a divalent germanium-containing group, more preferably a divalent silicon-containing group, and particularly preferably alkylsilylene, alkylarylsilylene or arylsilylene.

The above-described metallocene compounds may be used either alone or in combination of two or more kinds. The metallocene compounds may be diluted with hydrocarbon or halogenated hydrocarbon for use.

(Organoaluminumoxy Compound)

The organoaluminumoxy compound may be a conventionally known aluminoxane and also a benzene-insoluble organoaluminumoxy compound. This known aluminoxane is specifically represented by the following formula:

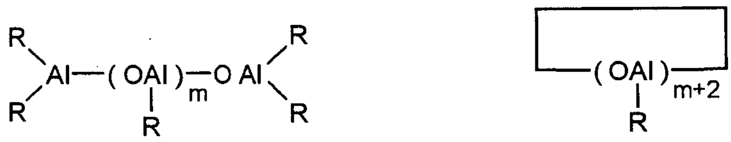

wherein R is a hydrocarbon group such as methyl, ethyl, propyl or butyl, preferably methyl or ethyl, and particularly preferably methyl; and m is an integer of 2 or more, and preferably 5 to 40.

The aluminoxane may be formed by a mixture of alkyloxyaluminum units represented by the formulae (OAl(R')) and (OAl(R")), respectively, wherein R' and R" are similar to the hydrocarbon groups represented by R, but R' and R" are different from each other. Further, the organoaluminumoxy compound may contain a small amount of an organometallic compound component of a metal other than aluminum.

(Ionized Ionic Compound)

Examples of the ionized ionic compounds (which may be sometimes referred to as ionic ionized or ionic compounds) include Lewis acids, ionic compounds, borane compounds and carborane compounds. Examples of the Lewis acids include the compounds represented by the formula $BR_3$ (wherein R is a phenyl group which may be substituted with fluorine, a methyl group or a trifluoromethyl group; or fluorine). Specific examples of Lewis acids include trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron, tris(3,5-dimethylphenyl)boron, and the like.

Examples of the above ionic compounds include trialkyl-substituted ammonium salts, N,N-dialkylanilinium salts, dialkylammonium salts, triarylphosphonium salts, and the like. As the ionic compounds, the trialkyl-substituted ammonium salts include triethylammoniumtetra(phenyl)boron, tripropylammoniumtetra(phenyl)boron, tri(n-butyl)ammoniumtetra(phenyl)boron, and the like. As the ionic compounds, the dialkyl ammonium salts include di(1-propyl)ammoniumtetra(pentafluorophenyl)boron, dicyclohexylammoniumtetra(phenyl)boron, and the like.

Examples of the above ionic compounds also include triphenylcarbeniumtetrakis(pentafluorophenyl) borate, N,N-dimethylaniliniumtetrakis(pentafluorophenyl) borate, ferroceniumtetra(pentafluorophenyl) borate, and the like.

Examples of the above borane compounds include decaborane (9); bis[tri(n-butyl)ammonium]nonaborate; bis[tri(n-butyl)ammonium]decaborate; metallic borane anion salts, such as nickel acid salts (III) of bis[tri(n-butyl)ammonium]bis(dodecahydridedodecaborate); and the like.

Examples of the above carborane compounds include 4-carbanonaborane (9), 1,3-dicarbanonaborane (8), metallic carborane anion salts such as nickel acid salts (IV) of bis[tri(n-butyl)ammonium]bis(undecahydride-7-carbaundecaborate), and the like.

The above ionized ionic compounds may be used either alone or in combination of two or more kinds.

The organoaluminum compound as described below may be used together with the organoaluminumoxy compound and/or the ionized ionic compound to form a metallocene-based catalyst.

(Organoaluminum Compound)

The organoaluminum compounds which may be used as required include the compounds which have at least one Al-carbon bond within a molecule. Such compounds include the organoaluminum compounds represented by the following formula (11):

$$(R^6)_mAl(OR^7)_nH_pX^4_q \qquad (11)$$

(wherein $R^6$ and $R^7$ may be the same or different from each other, and each represent a hydrocarbon group having usually 1 to 15, preferably 1 to 4 carbon atoms; $X^4$ represents a halogen atom; and m is a number satisfying $0 < m \leq 3$, n is a number satisfying $0 \leq n < 3$, p is a number satisfying $0 \leq p < 3$, q is a number satisfying $0 \leq q \leq 3$, and $m + n + p + q = 3$), and alkylated complexes of a Group 1 metal and aluminum represented by the following formula (12) :

$$(M^5)Al(R^6) \qquad (12)$$

(wherein $M^5$ represents Li, Na or K, and $R^6$ has the same meaning as $R^6$ in the above formula (11)).

(Polymerization)

The polyethylene (A) used in the present invention can be obtained by homopolymerization of ethylene, or copolymerization of ethylene and an α-olefin usually in the liquid phase in the presence of the above-described metallocene-based catalyst. Here, a hydrocarbon solvent is generally used, but an α-olefin may be used as the solvent. Further, each monomer as used herein is the same as described above.
As the polymerization process, suspension polymerization in which polyethylene (A) is polymerized in a solvent such as hexane in the state of the particles, gas phase polymerization in which polymerization is performed without a solvent, or solution polymerization in which polyethylene (A) is polymerized in the molten state alone or in the coexistence of a solvent at a polymerization temperature of 140°C or higher, can be employed. Among these, solution polymerization is preferable from the viewpoint of both of economy and quality.
The polymerization reaction may be conducted either batchwise or continuously. When the polymerization is conducted batchwise, the components of the catalyst are used at the concentrations described below.
The concentration of the metallocene compound in the polymerization system is usually 0.00005 to 0.1 mmol/l (polymerization volume), and preferably 0.0001 to 0.05 mmol/l.
The organoaluminumoxy compound is supplied in an amount of 1 to 10000, and preferably 10 to 5000, in terms of a molar ratio (Al/transition metal) of the aluminum atom to the transition metal in the metallocene compound in the polymerization system.
The ionized ionic compound is supplied in an amount of 0.5 to 20, and preferably 1 to 10, in terms of a molar ratio (ionized ionic compound/metallocene compound) of the ionized ionic compound to the metallocene compound in the polymerization system.
The organoaluminum compound, when used, is supplied to control its content at usually about 0 to 5 mmol/l (polymerization volume), and preferably about 0 to 2 mmol/l.
The polymerization reaction is conducted normally under the conditions of a temperature of -20 to +200°C, preferably 50 to 180°C, more preferably 70 to 180°C, and a pressure of more than 0 to 7.8 MPa (80 kgf/$cm^2$G) or less, and preferably more than 0 to 4.9 MPa (50 kgf/$cm^2$G) or less.
In the polymerization, ethylene and, if necessary, an α-olefin are supplied to the polymerization system at such the rate as to obtain polyethylene (A) of the above-mentioned specific composition. Further, a molecular weight modifier, such as hydrogen, can be used for the polymerization.
From such polymerization, the resultant polymer can normally be obtained as a polymerization solution containing the polymer. It is treated by the normal procedure to obtain polyethylene (A).
For the polymerization reaction, a catalyst containing the metallocene compound as described in the above (Example - 6 of metallocene compound) is particularly preferably used.

(Epoxidized low-molecular-weight ethylene polymer (B))

The epoxidized low-molecular-weight ethylene polymer (B) according to the present invention is derived from the low-molecular-weight ethylene polymer (A) consisting of (a) a structural unit derived from ethylene and at least one diene, or (b) a structural unit derived from ethylene, at least one α-olefin selected from α-olefins having 3 to 12 carbon atoms and at least one diene, in which the epoxy group of the epoxidized low-molecular-weight ethylene polymer (B) is formed by modifying the unsaturated group derived from the diene which is contained in the above low-molecular-weight ethylene polymer (A).
According to the present invention, the low-molecular-weight ethylene polymer (A) is subject to epoxidization to prepare an epoxidized low-molecular-weight ethylene polymer (B). The amount of the epoxy group to be introduced (content) is usually 30% to 100%, preferably 50% to 100%, and more preferably 70% to 100% of the total unsaturated bonds of the low-molecular-weight ethylene polymer (A). For $^1$H-NMR, the polymer was fully dissolved in a deuterated 1,1,2,2-tetrachloroethane as a lock solvent as well as a solvent, and thereafter measurement was conducted on the measurement sample tubes at 120°C. For the chemical shift, a chemical shift value of other peaks was determined as the peak of deuterated 1,1,2,2-tetrachloroethane was 5.92 ppm. The degree of epoxy modification of the total unsaturated groups of the epoxidized low-molecular-weight ethylene polymer (B) is determined by means of $^1$H-NMR. For example, in the case of epoxidized low-molecular-weight ethylene polymer (B) obtained by the epoxidization of the low-molecular-weight ethylene polymer (A) comprising ethylene only, the peaks (D) for three protons of the epoxy group are observed at 2.3 to 2.4 ppm, 2.6 to 2.7 ppm, and 2.8 to 2.9 ppm, each of which corresponds to one proton. With insufficient epoxy modification, the peaks (E) for three protons of unsaturated bonds are observed at 4.85 to 5.0 ppm, which corresponds to two protons, and 5.5 to 5.8 ppm, which corresponds to one proton. When the areas of the peak (D) and the peak (E) are referred to as $S_C$ and $S_D$, respectively, the epoxy group content (Ep %) is calculated from the following equation:

$$E_D\ (\%) = S_D/(S_D+S_E)\times 100$$

(Epoxidization process)

A process for introducing an epoxy group into the unsaturated bond of the low-molecular-weight ethylene polymer (A) is not particularly limited, but it includes, for example, (1) oxidation with peracids such as performic acid, peracetic acid and perbenzoic acid, (2) oxidation with titanosilicate and hydrogen peroxide, (3) oxidation with a rhenium oxide catalyst such as methyl trioxorhenium, and hydrogen peroxide, (4) oxidation with a porphyrin complex catalyst such as manganese porphyrin or iron porphyrin, and hydrogen peroxide or hypochlorite, (5) oxidation with a salen complex such as manganese-salen, and hydrogen peroxide or hypochlorite, (6) oxidation with a TACN complex such as a manganese-triazacyclononane (TACN) complex, and hydrogen peroxide, (7) oxidation with hydrogen peroxide in the presence of a transition metal catalyst belonging to Group VI such as a tungsten compound and a phase transfer catalyst. Among these oxidations, from the viewpoint of activities, (1) oxidation with peracids such as performic acid, peracetic acid and perbenzoic acid and (7) oxidation with hydrogen peroxide in the presence of a Group VI transition metal catalyst such as a tungsten compound and a phase transfer catalyst, are preferable.

In addition, in the case of epoxidization of a high melting point polymer, the reaction temperature may be sometimes higher than the peracid decomposition temperature, thereby the activity of oxidation with a peracid in (1) being reduced. For this reason, (7) oxidation with hydrogen peroxide in the presence of a Group VI transition metal catalyst such as a tungsten compound and a phase transfer catalyst is preferable. The high melting point polymer is a polymer having a melting point of 100°C or higher, and preferably 110°C or higher.

Hereinbelow, (1) oxidation with peracids such as performic acid, peracetic acid and perbenzoic acid, and (7) oxidation with hydrogen peroxide in the presence of a Group VI transition metal catalyst such as a tungsten compound and a phase transfer catalyst, are explained.

In the process of (1), the amount of organic peroxide to be added is in the range of usually 1 to 10 moles, and preferably 1 to 5 moles, based on 1 mole of the unsaturated bond of the low-molecular-weight ethylene polymer (A). Further, the reaction temperature is usually 0 to 150°C, and preferably 10 to 100°C, but it should be set at no higher than the decomposition temperature of the peracid used. In addition, care should be paid on the temperature setting so as not to show explodability depending on the peracids. The time taken for the reaction is in the range of usually 0.1 to 10 hours, and preferably 0.5 to 5 hours. The concentration of the polymer is in the range of usually 5 to 400 g/l, and preferably 10 to 300 g/l. For the solvent which is used for preparing a polymer having an epoxy group at one end, any one which does not give any adverse effect on the oxidation reaction may be used, but examples thereof include an aromatic hydrocarbon solvent such as benzene, toluene and xylene.

For the process for generating a peracid in the reaction system, oxidation with a carboxylic acid such as acetic acid and hydrogen peroxide in the presence of an acidic catalyst such as sulfuric acid and a salt such as sodium sulfate, may be used.

The process of (7) will be explained in detail. The Group VI transition metal catalyst is tungstic acid, tungstate or a tungsten complex, and, for example, tungstic acid, alkaline tungstate, ammonium tungstate, tungsten trioxide, tungsten trisulfide, tungsten hexachloride, phosphotungstic acid, tungstosilicic acid, borotungstic acid, and the like. Particularly preferable tungstate is a tungstate in the oxidation state of II, IV and VI, and $Na_2WO_4$ or $(NH_4)_2WO_4$ is most preferably used. The tungstic acids may be used alone or in combination of two or more kinds.

Examples of the phase transfer catalyst include quaternary ammonium salts, nitrogen ring-containing quaternary ammonium salts, quaternary phosphonium salts, macrocyclic polyethers and the like, and preferably quaternary ammonium salts or nitrogen ring-containing quaternary ammonium salts. Specific examples of the quaternary ammonium salts include trioctylmethylammonium chloride, trioctylethylammonium chloride, dilauryldimethylammonium chloride, lauryltrimethylammonium chloride, stearyltrimethylammonium chloride, lauryldimethylbenzylammonium chloride, stearyldimethylammonium chloride, tricaprylmethylammonium chloride, tetrabutylammonium chloride, benzyltrimethylammonium chloride, benzyltriethylammonium chloride, and the like, as well as bromides, iodides, sulfites or sulfates of the above compounds. The nitrogen ring-containing quaternary ammonium salts include the quaternary ammonium salts in which the nitrogen ring comprises a pyridine ring, a picoline ring, a quinoline ring, an imidazoline ring or a morpholine ring, but the quaternary ammonium compounds comprising the pyridine ring are preferred and specific examples thereof include the following. Alkyl(a linear or branched alkyl having 8 to 20 carbon atoms, the same applies to the followings)pyridinium salts (for example, N-laurylpyridinium chloride, N-cetylpyridinium chloride, and the like), alkylpicolinium salts (for example, N-laurylpicolinium chloride, and the like), alkylquinolium chloride, alkylisoquinolium chloride, alkylhydroxyethylimidazoline chloride, alkylhydroxymorpholine chloride, and the like, as well as bromides, iodides or sulfates thereof. The phase transfer catalysts may be used alone or in combination of two or more kinds.

The concentration of hydrogen peroxide used in the process of the present invention is 3% by mass to 90%

by mass, preferably 5% by mass to 70% by mass, and more preferably 10% by mass to 50% by mass. The amount of hydrogen peroxide used is 0.5 mole to 10 moles, preferably 0.8 mole to 8 moles, and more preferably 1.0 mole to 5 moles, based on 1 mole of the unsaturated group contained in the low-molecular-weight ethylene polymer (A) as the raw materials.

For the purpose of promoting the reaction in the present reaction, a phosphoric acid compound may be added. Examples of the phosphoric acid compounds include phosphoric acid, α-aminomethylphosphonic acids, and the like. The amino group of the α-aminomethylphosphonic acids may be substituted with an alkyl group, an aryl group, or the like, but among the α-aminomethylphosphonic acids, those which have at least one hydrogen atom, in particular, on the nitrogen are particularly useful. Specific examples of the α-aminomethylphosphonic acids include aminomethylphosphonic acid, α-aminoethylphosphonic acid, α-aminopropylphosphonic acid, α-aminobutylphosphonic acid, α-aminopentylphosphonic acid, α-aminoheptylphosphonic acid, α-aminohexylphosphonic acid, α-aminoheptylphosphonic acid, α-aminooctylphosphonic acid, α-aminononylphosphonic acid, α-amino-α-phenylmethylphosphonic acid, and the like. These α-aminomethylphosphonic acids and phosphoric acids may be used alone or in combination of two or more kinds.

For the preparation process of the present invention, in general, the each of the amounts of the tungstic acid, the phase transfer catalyst and the phosphoric acid to be used, is usually 0.01 to 10 mol%, more preferably 0.1 to 5 mol%, and most preferably 0.5 to 2 mol%, based on the unsaturated groups contained in the low-molecular-weight ethylene polymer (A).

For the reaction solvent, use may be made of those which are inert to the low-molecular-weight ethylene polymer (A), hydrogen peroxide and the produced epoxidized low-molecular-weight ethylene polymer (B), and examples thereof include aliphatic hydrocarbons such as n-hexane, alicyclic hydrocarbons such as cyclohexane, aromatic hydrocarbons such as toluene and xylene, esters such as ethyl acetate, ketones such as acetone, methyl ethyl ketone, methyl isobutyl ketone, diethyl ketone and methyl propyl ketone, and halogenated hydrocarbons such as chloroform, dichloroethane, trichloroethane and perchloroethane. From the standpoint of industry, for the low-molecular-weight ethylene polymer (A) as the raw materials, aromatic hydrocarbons such as toluene and xylene are preferable as long as they are not insoluble in the solvent.

In one general embodiment of the present invention, tungstic acids, phase transfer catalysts, phosphoric acids, and double-bond containing ethylene polymers at one end are put into the reactor, mixed and warmed until they are uniformly dissolved therein. After warmed to the reaction temperature, aqueous hydrogen peroxide is slowly added dropwise. The reaction temperature is preferably the temperature at which the low-molecular-weight ethylene polymer (A) used melts, but it is usually 25°C to 150°C, preferably 50°C to 110°C, and more preferably 80 to 100°C. When the reaction is effected at 100°C or higher, bumping may occur by the dropping of hydrogen peroxide, and thus an appropriate reaction apparatus such as an autoclave is chosen. The dropping speed of hydrogen peroxide is accorded with the reaction speed and the reaction heat removal speed, and the dropping is conducted slowly. For the process of the present invention, the reaction may be effected by adjusting pH of the reaction mixture. The pH is usually between pH 1.0 to 4.0, preferably pH 1.5 to 2.5, and particularly preferably about pH 2.0.

The pH of the reaction mixture can be adjusted by adding an aqueous solution of acids such as sulfuric acid and phosphoric acid. The reaction time varies depending on the reaction conditions such as the amount of a catalyst used, the reaction temperature, the reactivity of olefins, and the like, but it is usually several minutes to 50 hours. For the preparation process of the present invention, the amount of the by-product generated is small and, after the reaction, excessive hydrogen peroxide, the catalyst, water or the reaction solvent is removed by simple operations such a crystallization operation and washing, to obtain a desired epoxy compounds of olefins.

The epoxidized low-molecular-weight ethylene polymer (B) has a density, as measured by a density gradient tube method, of 870 to 1,050 kg/$m^3$, preferably 870 to 1,020 kg/$m^3$, more preferably 880 to 1,000 kg/$m^3$, and even more preferably 900 to 1,000 kg/$m^3$.

If the epoxidized low-molecular-weight ethylene polymer (B) has a density within the above range, a modified low-molecular-weight ethylene polymer (C) with good releasability as a release agent for a toner can be obtained.

The low-molecular-weight ethylene polymer (A) preferably contains the structural unit derived from diene in the proportion of usually 0.01 to 4.0 mol%, preferably 0.01 to 2.0 mol%, and more preferably 0.1 to 7.0 mol%.

If the low-molecular-weight ethylene polymer (A) contains the structural unit derived from diene in the proportion within the above range, a modified low-molecular-weight ethylene polymer (C) with suitably high polymerization activity, and good releasability as a release agent for a toner can be obtained.

The epoxidized low-molecular-weight ethylene polymer (B) preferably contains the structural unit derived from ethylene in the range of usually 80 to 99 mol%, and preferably 90 to 99 mol%. If the structural unit derived from ethylene is within the above range, a modified low-molecular-weight ethylene polymer (C) with good releasability as a release agent for a toner can be obtained.

The epoxidized low-molecular-weight ethylene polymer (B) has a melting point, as measured by a differential scanning calorimeter (DSC), in the range of 70°C to 130°C, preferably 80 to 120°C, and more preferably 90 to 110°C.

If the epoxidized low-molecular-weight ethylene polymer (B) has a melting point within the above range, a

modified low-molecular-weight ethylene polymer (C) with good releasability as a release agent for a toner can be obtained.

The epoxidized low-molecular-weight ethylene polymer (B) has an intrinsic viscosity [η], as measured in decalin at 135°C, of preferably 0.04 to 0.50 dl · $g^{-1}$, more preferably 0.05 to 0.50 dl/g, even more preferably 0.07 to 0.20 dl · $g^{-1}$, and still even more preferably 0.10 to 0.18 dl · $g^{-1}$.

When the epoxidized low-molecular-weight ethylene polymer (B) has an intrinsic viscosity [η], as measured in decalin at 135°C, within the above range, a modified low-molecular-weight ethylene polymer (C) with good releasability as a release agent for a toner can be obtained.

The epoxidized low-molecular-weight ethylene polymer (B) has a Mn, as measured by gel permeation chromatography (GPC), in the range of 400 to 5,000, preferably 800 to 5,000, more preferably 1,000 to 3,000, and even more preferably 1,500 to 2,500.

When the epoxidized low-molecular-weight ethylene polymer (B) has a Mn within the above range, a modified low-molecular-weight ethylene polymer (C) with good releasability as a release agent for a toner can be obtained.

The epoxidized low-molecular-weight ethylene polymer (B) has a molecular weight distribution, Mw/Mn, as measured by GPC, of usually 5.0 or less, preferably Mw/Mn of 4.5 or less, and more preferably 4.0 or less. In addition, the lower limit of the molecular weight distributions is 1.0.

Further, each of the weight-average molecular weight (Mw) and the number-average molecular weight (Mn) is a value in terms of polystyrene by gel permeation chromatography (GPC), and measurement by GPC is performed under the conditions: a temperature: 140°C, and a solvent: o-dichlorobenzene.

The epoxidized low-molecular-weight ethylene polymer (B) has a penetration of usually 15 dmm or less, preferably 10 dmm or less, more preferably 3 dmm or less, and even more preferably 1 dmm or less. Penetration can be measured in accordance with JIS K2207.

When the epoxidized low-molecular-weight ethylene polymer (B) has a penetration within the above range, a modified low-molecular-weight ethylene polymer (C) with suitable rigidity as a release agent for a toner can be obtained.

The epoxidized low-molecular-weight ethylene polymer (B) of the present invention has a density of 870 to 1,050 kg/$m^3$, a melting point of 70 to 130°C, and a number-average molecular weight (Mn) of 400 to 5,000.

The epoxidized low-molecular-weight ethylene polymer (B) according to the present invention exhibits characteristic properties caused by having an epoxy group in the polymer, and for example, it has excellent adhesiveness with various printing inks or coating materials. Further, it imparts dye-affinity, and has excellent adhesiveness with copper, other metals, and further other resins. The epoxidized low-molecular-weight ethylene polymer is advantageously used as a binder between the incompatible resins because of its excellent adhesiveness with other resins, whereby it is useful for contributing to the improvement on the interface strength of a polyolefin resin with a resin having a functional group with the reactivity to an epoxy group. Further, it can serve as a resin additive by utilizing the reactivity of the epoxy group, for example, by introducing a compound having antioxidative property, ultraviolet absorption property, antifogging property, photosensitivity, coloring property, chelating property or the like.

(Modified low-molecular-weight ethylene polymer (C))

The modified low-molecular-weight ethylene polymer (C) of the present invention can be prepared by a well-known method. For example, it may be prepared using a process of adding a carboxylic acid compound to the epoxidized low-molecular-weight ethylene polymer (B) in the absence of a solvent or in the presence of a solvent through a radical reaction, a process of adding a carboxylic acid compound in the presence of a Lewis acid, a process of adding a carboxylic acid compound at a high temperature, or the like. The reaction temperature is 20°C to 300°C, and particularly preferably 120°C to 250°C. Since the epoxidized low-molecular-weight ethylene polymer (B) has a melting point of around 120°C, setting a reaction temperature at 120°C or higher would be preferable from the viewpoint of the uniform reaction system.

The modified low-molecular-weight ethylene polymer (C) of the present invention can be obtained by carrying out a radical reaction of an unsaturated carboxylic acid compound with the epoxidized low-molecular-weight ethylene polymer (B), or by carrying out an addition reaction of at least a monovalent or higher carboxylic acid to the epoxidized low-molecular-weight ethylene polymer (B), or the like. Examples of the monovalent or higher carboxylic acid as above include a monocarboxylic acid, a divalent carboxylic acid or an anhydride or lower alkyl ester thereof, and a polycarboxylic acid such as a trivalent or higher carboxylic acid.

The monocarboxylic acids as used herein, aliphatic monocarboxylic acids such as octanoic acid, decanoic acid, dodecanoic acid, myristic acid, palmitic acid and stearic acid, unsaturated monocarboxylic acids such as acrylic acid, methacrylic acid, crotonic acid and isocrotonic acid, aromatic monocarboxylic acids such as benzoic acid and naphtalenecarboxylic acid, and they may be branched or have unsaturated groups.

Specific examples of the divalent carboxylic acids include alkyl dicarboxylic acids such as terephthalic acid, malonic acid, succinic acid, glutaric acid, adipic acid, azelaic acid, sebacic acid and azelaic acid, an unsaturated dicarboxylic acid such as maleic acid, fumaric acid, citraconic acid and itaconic acid, benzene dicarboxylic acids such as phthalic acid, isophthalic acid and phthalic anhydride, anhydrides or lower alkyl esters of these dicarboxylic acids. The

polycarboxylic acids include trimellitic acid, pyromellitic acid and acid anhydrides of these. Further, for the purpose of controlling the molecular weight, a divalent carboxylic acid and a trivalent or higher polycarboxylic acid can be also used.

(Release agent for toner)

As the binder resin used for the toner of the present invention, use may be made of the following binder resins. The binder resins include, for example, homopolymers of styrene and its substituted derivatives such as polystyrene, poly-p-chlorostyrene and polyvinyltoluene; styrene copolymers such as a styrene-p-chlorostyrene copolymer, a styrene-vinyl toluene copolymer, a styrene-vinyl naphthalene copolymer, a styrene-acrylate copolymer, a styrene-methacrylate copolymer, a styrene-methyl α-chloromethacrylate copolymer, a styrene-acrylonitrile copolymer, a styrene-vinyl methyl ether copolymer, a styrene-vinyl ethyl ether copolymer, a styrene-vinyl methyl ketone copolymer, a styrene-butadiene copolymer, a styrene-isoprene copolymer and a styrene-acrylonitrile-indene copolymer; polyvinyl chloride; phenolic resins; denatured natural resin type phenolic resins; denatured natural resin type maleic acid-based resins; acrylic resins; methacrylic resins; polyvinyl acetate; silicone resins; polyester resins other than the above resins; polyurethane resins; polyamide resins; furan resins; epoxy resins; xylenic resins; polyvinyl butyral; terpene resins; cumarone-indene resins; petroleum-derived resins; and crosslinked styrene copolymers. Examples of the preferable binding materials include styrene copolymers or polyester resins.

The Tg of the binder resin for a toner used in the present invention is usually 40 to 70°C. When the Tg is less than 40°C, the toner causes agglomeration of toner particles, which is called blocking; therefore, which is not preferable. When the Tg is higher than 70°C, the fixing properties are deteriorated, which is not preferable.

The binder resin for a toner used in the present invention has Mw/Mn, as measured by GPC with a tetrahydrofuran (THF) soluble portion, of preferably 4 to 100, and more preferably 6 to 60. With the Mw/Mn of less than 4, the offset resistance lacks, which is not preferable. With the Mw/Mn of more than 100, the fixing property is deteriorated, which is not preferable.

The binder resin for a toner used in the present invention has a peak molecular weight, as measured by GPC with a THF soluble portion, of preferably 1000 to 30000, more preferably 1000 to 20000, and even more preferably 2000 to 15000. With the peak molecular weight of less than 1000, the offset resistance and the mechanical durability are deteriorated, which is not preferable. With the peak molecular weight of more than 30000, the fixing property is deteriorated, which is not preferable.

The amount of a THF insoluble portion which is contained in the binder resin for a toner used in the present invention is 0 to 40 % by weight, based on the resin composition. When the amount of a THF insoluble portion is more than 40 % by weight, the fixing property is deteriorated, which is not preferable.

In order to further improve the low temperature fixing characteristics, or the offset resistance of the binder resin for a toner of the present invention, the following waxes may be used in combination. For the waxes, polyolefin waxes such as a polyethylene wax and a polypropylene wax may be used. The specific trade names corresponding to the polyolefin waxes may be exemplified by the products manufacture by Mitsui Chemicals, Inc. under the trade names of Hi-Waxes 800P, 400P, 200P, 100P, 720P, 420P, 320P, 405MP, 320MP, 4051E, 2203A, 1140H, NL800, NP055, NP105, NP505, NP805, or the like. Further, natural waxes such as a ceramic wax, a rice wax, a sugar wax, an urushi wax, a beeswax, a carnauba wax, a candelilla wax and montan wax may be contained. The amount of addition thereof is preferably in the range of 0 to 20% by weight based on the weight of the resin composition for a toner.

For the method of using the waxes in combination, use can be made of in any step such as during or after the preparation of the binder resin for a toner, and during the preparation of an electrophotographic toner for developing an electrostatic charge image as described later.

The dispersion of the release agent particles is obtained by heating a mixture of at least a release agent and a dispersion to the melting point of the release agent or higher, emulsifying it using the following high-pressure type emulsifier, and then cooling the resultant emulsion to solidify the fine particles of the release agent. For the dispersion of the release agent particles, anionic surface active agents, cationic surface active agents, amphoteric surface active agents, or nonionic surface active agents may be used, if desired. In addition to the release agent, a coloring agent, charge-controlling agent particles, internally added particles, or the like may be added. For emulsification, stirring is sufficiently performed using a stirring apparatus such as a homomixer. Further, the stirring time is preferably 10 minutes or longer. The reason is that when the stirring time is too short, a sharp particle size distribution cannot be obtained.

Examples of the anionic surface active agents include fatty acid salts such as sodium oleate and potassium castor oil; alkyl sulfuric ester salts such as sodium lauryl sulfate and ammonium lauryl sulfate, alkylbenzenesulfonic acid salts such as sodium dodecylbenzenesulfonate, alkylnaphthalenesulfonic acid salts, dialkylsulfosuccinic acid salts, alkylphosphoric ester salts, naphthalene sulfonic acid formalin condensates, polyoxyethylenealkyl sulfuric ester salts, and the like.

Examples of the cationic surface active agents include alkylamine salts such as laurylamine acetate and stearylamine acetate, quaternary ammonium salts such as lauryltrimethylammonium chloride and stearyltrimethylammonium

chloride, and the like.

Examples of the nonionic surface active agents include polyoxyethylene alkyl ether, polyoxyethylene alkylphenol ether, polyoxyethylene fatty acid ester, sorbitan fatty acid ester, polyoxysorbitan fatty acid ester, polyoxyethylenealkylamine, glycerine, fatty acid ester, oxyethylene-oxypropylene block copolymers, and the like.

Examples of the amphoteric surface active agents include lauryltrimethylammonium chloride.

The amount of the surface active agents to be used for dispersing the release agent is preferably 0.01 to 10% by weight, preferably 0.5 to 5% by weight, and more preferably 0.5 to 2% by weight. When the amount is less than 0.01% by weight, there is a problem that specific particles are released, or the like because the stabilities of each particle upon agglomeration are different from each other, whereas when the amount is more than 10% by weight, there is a risk that the particle size distribution of the particles becomes wider, or it becomes difficult to control the particle size, or the moisture resistance of the toner becomes deteriorated.

(Electrophotographic toner)

The electrophotographic toner for developing an electrostatic charge image of the present invention comprises the binder resin for a toner, a charge-controlling agent, a coloring agent, a magnetic material, or the like.

As the charge-controlling agent usable for the electrophotographic toner for developing an electrostatic charge image of the present invention, known charge-controlling agents can be used alone or in combination. The charge-controlling agent is used in an amount which is required to allow the toner produced to have an intended charge amount. The amount of the charge-controlling agent is preferably, for example, about 0.05 to 10 parts by mass per 100 parts by mass of the resin. The positive charge-controlling agents include, for example, nigrosine type dyes, quaternary ammonium salt compounds, triphenylmethane type compounds, imidazole type compounds, polyamine resins, and the like. The negative charge-controlling agents include, for example, azo type dyes containing a metal such as Cr, Co, Al or Fe, metal salicylate compounds, metal alkylsalicylate compounds, calix arene compounds, and the like.

The coloring agent usable for the electrophotographic toner for developing an electrostatic charge image of the present invention can be any coloring agent which has heretofore been known in the conventional toner production. Examples thereof include dyes and pigments, such as fatty acid metal salts, various carbon blacks, phthalocyanine type dyes, rhodamine type dyes, quinacridone type dyes, triallylmethane type dyes, anthraquinone type dyes, azo type dyes, diazo type dyes and the like. These coloring agents can be used alone or in combination of two or more kinds.

The magnetic material which can be used for the electrophotographic toner for developing an electrostatic charge image of the present invention, can be any of alloys, compounds, etc. each containing a ferromagnetic element, which have heretofore been used in production of magnetic toner. Examples thereof include iron oxides or compounds between bivalent metal and iron oxide, such as magnetite, maghetite and ferrite; a metal such as iron, cobalt and nickel; alloys between such metal and other metal such as aluminum, cobalt, copper, lead, magnesium, tin, zinc, antimony, beryllium, bismuth, cadmium, calcium, manganese, selenium, titanium, tungsten and vanadium; and a mixture thereof. These magnetic materials have an average particle size of preferably about 0.1 to 2 $\mu$m, and more preferably about 0.1 to 0.5 $\mu$m.

The content of the magnetic material in the toner is usually about 20 to 200 parts by mass, and preferably 40 to 150 parts by mass, based on 100 parts by mass of the binder resin. The saturation magnetization of the toner is preferably 15 to 35 emu/g (magnetic field for measurement: 1 kilooersted).

The toner of the present invention can be internally or externally added with a well-known additive, if desired, such as a lubricant, a fluidity-improving agent, an abrasive, an electric conductivity-imparting agent, an anti-peeling agent. Examples of these additives include polyvinylidene fluoride, zinc stearate or the like as the lubricant; colloidal silica, aluminum oxide, titanium oxide, or the like as the fluidity-improving agent; cerium oxide, silicon carbide, strontium titanate, tungsten carbide, calcium carbonate or the like as the abrasive; and carbon black, stannic oxide, or the like as the electric conductivity-imparting agent. In addition, the fine powders of a fluorine-containing polymer such as polyvinylidene fluoride are preferable from the viewpoint of fluidity, abrasiveness, charging stability, or the like.

The electrophotographic toner for developing an electrostatic charge image according to the present invention can be prepared using a conventionally well-known method. For example, the components for a toner such as the above-described binder resin for a toner, and the like are sufficiently mixed by a mixer such as a ball mill, a Henschel mixer, thoroughly kneaded with a heat kneader such as a heat roll kneader, or a single- or twin-screw extruder, cooled and solidified, mechanically roughly pulverized with a pulverizer such as a hammer mill, finely pulverized with a jet mill, and then classified.

It can be also prepared by a process comprising a mixing step for mixing a dispersion of the resin particles obtained by dispersing the resin particles in the dispersant, a dispersion of the coloring agent obtained by dispersing the coloring agent particles in the dispersant, and a dispersion of the release agent obtained by dispersing the release agent particles in the dispersant; an agglomeration step for forming the agglomerated particles corresponding to the particle size of the toner; and a fusion step for fusing the agglomerated particles by heating.

It can be also prepared by a process comprising polymerizing the composition which comprises a polymerizable monomer, a coloring agent, a release agent, a charging control agent, and the like.

The electrophotographic toner for developing an electrostatic charge image of the present invention can be mixed with a carrier, and then used as a two-component or 1.5-component developing agent, or can be used as a one-component developing agent having the magnetic component incorporated in the toner, a non-magnetic one-component developing agent which does not use a carrier or a magnetic component, or a microtoning developing agent. When the toner of the present invention is used as two-component or 1.5-component developing agent, as the carrier, any conventionally well-known carrier can be used. Examples of the carrier which can be used include magnetic powders such as iron powders, ferrite powders and nickel powders and glass beads, or these powders having a surface treated with a resin or the like. Examples of the resin for coating the surface of the carrier include a styrene-acrylate copolymer, a styrene-methacrylate copolymer, an acrylate copolymer, a methacrylate copolymer, a fluorine-containing resin, a silicon-containing resin, a polyamide resin, an ionomer resin, a polyphenylene sulfide resin, and the like, or a mixture thereof. Among these, a fluorine-containing resin and a silicon-containing resin are particularly preferable due to little formation of the spent toner.

The weight-average particle size of the electrophotographic toner for developing an electrostatic charge image of the present invention is 10 $\mu$m or less, but it is preferably 3 to 10 $\mu$m from the viewpoint of the development characteristics, and more preferably 5 to 10 $\mu$m from the viewpoint of the development characteristics. When the weight-average particle size of the toner exceeds 10 $\mu$m, it becomes difficult to make a fine image developed, which is unfavorable from the viewpoint of the development characteristics. Further, the measurement of the particle size distribution of the toner can be performed, for example, by means of a Coulter counter.

## EXAMPLES

Hereinafter, the present invention will be explained in more detail with reference to Examples, but the invention is not intended to be limited thereby. Unless indicated otherwise, "%" as described below means "% by mass".

[Example 1]

[Synthesis Example 1]

(Synthesis of low-molecular-weight ethylene polymer)

1000 ml of hexane and 50 ml of vinylnorbornene(5-vinylbicyclo[2,2,1]hept-2-ene) were charged into a stainless autoclave having an inner volume of 2 liter which had been sufficiently purged with nitrogen, and hydrogen was introduced until the pressure in the system reaches 0.3 MPa-G. Thereafter, the temperature in the system was raised to 150°C, and then 0.3 mmol of triisobutylaluminum, 0.004 mmol of triphenylcarbenium tetrakis(pentafluorophenyl)borate, and 0.02 mmol of (t-butylamide)dimethyl(tetramethyl-$\eta^{5}$-cyclopentadienyl)silane titanium dichloride (manufactured by Sigma-Aldrich Corporate) were pressurized with ethylene to initiate polymerization. Thereafter, the total pressure was retained at 2.9 MPa-G by continuously supplying only ethylene, and polymerization was performed at 150°C for 20 minutes. The polymerization was stopped by addition of a small amount of ethanol to the system, and unreacted ethylene and vinylnorbornene were purged. The resulting polymer solution was dried at 100°C overnight under reduced pressure.

As a result, a low-molecular-weight ethylene polymer (A-1) having the content of the unsaturated groups of 11.8 groups/1,000 carbon atoms, the content of vinylnorbornene of 10.3% by weight (content (average) of the unsaturated groups = 1.1 groups/molecule), a density of 956 kg/$m^3$, a melting point of 117°C, a penetration of 1 or less, Mn of 1,300, Mw of 3,700 and Mw/Mn of 2.8, was obtained.

[Synthesis Example 2]

(Synthesis of low-molecular-weight ethylene polymer)

950 ml of hexane, 50 ml of propylene and 70 ml of isoprene were charged into a stainless autoclave having an inner volume of 2 liter which had been sufficiently purged with nitrogen, and hydrogen was introduced until the pressure in the system reaches 0.2 MPa-G. Thereafter, the temperature in the system was raised to 150°C, and then 0.3 mmol of triisobutylaluminum, 0.004 mmol of triphenylcarbenium tetrakis(pentafluorophenyl)borate, and 0.02 mmol of (t-butylamide)dimethyl(tetramethyl-$\eta^{5}$-cyclopentadienyl)silane titanium dichloride (manufactured by Sigma-Aldrich Corporate) were pressurized with ethylene to initiate polymerization. Thereafter, the total pressure was retained at 2.9 MPa-G by continuously supplying only ethylene, and polymerization was performed at 150°C for 20 minutes. The polymerization was stopped by addition of a small amount of ethanol to the system, and unreacted ethylene and propylene

were purged. The resulting polymer solution was dried at 100°C overnight under reduced pressure.

As a result, a low-molecular-weight ethylene polymer (A-2) having the content of the unsaturated groups of 6.0 groups/1,000 carbon atoms, the content of isoprene of 2.4% by weight (content (average) of the unsaturated groups = 1.5 groups/molecule), a density of 915 kg/$m^3$, a melting point of 104°C, a penetration of 4, Mn of 3,500, Mw of 5,600 and Mw/Mn of 1.6, was obtained.

[Synthesis Example 3]

(Synthesis of low-molecular-weight ethylene polymer)

980 ml of hexane, 20 ml of propylene and 80 ml of vinylnorbornene(5-vinylbicyclo[2,2,1]hept-2-ene) were charged into a stainless autoclave having an inner volume of 2 liter which had been sufficiently purged with nitrogen, and hydrogen was introduced until the pressure in the system reaches 0.3 MPa-G. Thereafter, the temperature in the system was raised to 150°C, and then 0.3 mmol of triisobutylaluminum, 0.004 mmol of triphenylcarbenium tetrakis (pentafluorophenyl)borate, and 0.02 mmol of (t-butylamide)dimethyl(tetramethyl-$\eta^5$-cyclopentadienyl)silane titanium dichloride (manufactured by Sigma-Aldrich Corporate) were pressurized with ethylene to initiate polymerization. Thereafter, the total pressure was retained at 2.9 MPa-G by continuously supplying only ethylene, and polymerization was performed at 150°C for 20 minutes. The polymerization was stopped by addition of a small amount of ethanol to the system, and unreacted ethylene and vinylnorbornene were purged. The resulting polymer solution was dried at 100°C overnight under reduced pressure.

As a result, a low-molecular-weight ethylene polymer (A-3) having the content of the unsaturated groups of 23.0 groups/1,000 carbon atoms, the content of vinylnorbornene of 20.0% by weight (content (average) of the unsaturated groups = 1.8 groups/molecule), a density of 943 kg/$m^3$, a melting point of 112°C, a penetration of 3, Mn of 1,100, Mw of 3,400 and Mw/Mn of 3.1, was obtained.

[Example 1]

100 g of the low-molecular-weight ethylene polymer (A-1), 300 g of toluene, 0.85 g (2.6 mmol) of $NaWO_4$, 0.60 g (1.3 mmol) of $CH_3(nC_8H_{17})_3NHSO_4$, and 0.11 g (1.3 mmol) of phosphoric acid were put into a 500-ml separable flask, and heated under reflux for 30 minutes while stirring, to completely dissolve the polymerized material. The internal temperature was set at 90°C, 37 g (326 mmol) of 30% aqueous hydrogen peroxide was added dropwise for 3 hours, and then the mixture was stirred at the internal temperature of 90 to 92°C for 3 hours. Thereafter, 34.4 g (54.4 mmol) of a 25% aqueous sodium thiosulfate solution was added while it was kept at 90°C, and the mixture was stirred for 30 minutes. It was confirmed that a peroxide in the reaction system was completely decomposed on a peroxide test paper. 200 g of dioxane was added at the internal temperature of 90°C to crystallize a product, and the solid was taken by filtration and washed with dioxane. The obtained solid was stirred at room temperature in an aqueous 50% methanol solution, taken by filtration and washed with methanol. The obtained solid was further stirred in 400 g of methanol, taken by filtration and washed with methanol. The resultant solid was dried at a room temperature under the reduced pressure of 1 to 2 hPa to obtain a low-molecular-weight ethylene polymer (A-1) having a density of 991 kg/$m^3$, a melting point of 116°C, a penetration of 1 or less, Mn of 1,500, Mw of 5,000, and Mw/Mn of 3.3. Thus, 96.3 g of an epoxidized ethylene polymer (B-1) was obtained as a white solid (yield: 99%, olefin conversion: 100%).

[Example 2]

The same procedure as in Example 1 was carried out except that the low-molecular-weight ethylene polymer (A-1) was changed into (A-2), to obtain 97.2 of an epoxidized ethylene polymer (B-2) as a white solid, having a density of 982 kg/$m^3$, a melting point of 107°C, a penetration of 1, Mn of 3,900, Mw of 7,000 and Mw/Mn of 1.8 (yield: 99%, olefin conversion: 100%).

[Example 3]

The same procedure as in Example 1 was carried out except that the low-molecular-weight ethylene polymer (A-1) was changed into (A-3), to obtain 96.8 of an epoxidized ethylene polymer (B-3) as a white solid having a density of 1,012 kg/$m^3$, a melting point of 115°C, a penetration of 1 or less, Mn of 1,300, Mw of 4,400 and Mw/Mn of 3.4 (yield: 99%, olefin conversion: 100%).

[Comparative Example 1]

The same procedure as in Example 1 was carried out except that 5 moles of m-chloroperbenzoic acid was used instead of hydrogen peroxide, a phase transfer catalyst and phosphoric acid, per 1 mole of an unsaturated group contained in a low-molecular-weight ethylene polymer as a raw material, to obtain a yield of the corresponding epoxidized low-molecular-weight ethylene polymer of 0%.

The molecular weight and the molecular weight distribution of the resin composition for a toner according to the present invention were determined by GPC. Measurement was carried out under the following conditions using commercially available monodisperse standard polystyrene as the standard.

| | |
|---|---|
| Detector: | SHODEX RI-71S |
| Solvent: | tetrahydrofuran |
| Column: | KF-G + KF-807L × 3 + KF800D |
| Flow rate: | 1.0 ml/min |
| Sample: | 0.25% THF solution |

The molecular weight and the molecular weight distribution of the wax according to the present invention were determined by GPC. Measurement was carried out under the following conditions using commercially available monodisperse standard polystyrene as the standard.

| | |
|---|---|
| Device: | 150C-ALC/GPC manufactured by Waters Corp. |
| Solvent: | o-dichlorobenezne |
| Column: | CM type column manufactured by Tosoh Corporation |
| Flow rate: | 1.0 ml/min |
| Sample: | 0.10% o-dichlorobenezne solution |
| Temperature: | 140°C |

The glass transition temperature (Tg) according to the present invention was measured using DSC-20 (manufactured by Seiko Instruments Inc.) according to differential scanning calorimetry (DSC) measuring method. About 10 mg of a sample was subjected to temperature elevation from -20°C to 100°C at a rate of 10°C/min to obtain a curve, in which an intersection of the base line and the inclined line of the endothermic peak was determined, and the Tg of the sample was determined from the intersection. It is preferable that before the above temperature elevation measurement, the sample resin is heated to about 200°C, is kept at that temperature for 5 minutes, and is cooled quickly to a normal temperature (25°C), in order to allow the resin to have a uniform thermal history.

The melting point (Tm) according to the present invention was measured using DSC-20 (manufactured by Seiko Instruments Inc.) according to differential scanning calorimetry (DSC) measuring method. About 10 mg of a sample was subjected to temperature elevation from -20°C to 200°C at a rate of 10°C/min to obtain a curve, in which the endothermic peak was determined as a melting point. It is preferable that before the above temperature elevation measurement, the sample resin is heated to about 200°C, is kept at that temperature for 5 minutes, and is cooled quickly to a normal temperature (25°C), in order to allow the resin to have a uniform thermal history.

The acid value according to the present invention refers to mg of potassium hydroxide required to neutralize 1 g of the resin.

According to the present invention, the toner was evaluated as follows.

(1) Fixing properties

An unfixed image was formed using a copier produced by remodeling a commercially available electrophotographic copier. This unfixed image was fixed using a hot roller fixing apparatus produced by remodeling of the fixing section of a commercially available copier. The fixing was conducted at a fixing speed of the hot roll of 300 mm/sec with the temperature of the hot roller being changed at intervals of 5°C. The fixed image obtained was rubbed 10 times by applying a load of 0.5 kg using a sand eraser manufactured by Tombow Pencil Co., Ltd., and the image densities before and after the rubbing test were measured using a Macbeth reflection densitometer. The temperature at which the change of image density became 70% or more was taken as the lowest fixing temperature of the toner. The hot roller fixing apparatus as used herein had no silicone oil feeder. The environmental conditions were normal temperature and normal pressure (temperature = 22°C, relative humidity = 55%).

Symbol
O: lowest fixing temperature ≤ 170°C
Δ: 190°C ≥ lowest fixing temperature > 170°C
x: lowest fixing temperature > 190°C

(2) Offset resistance

For the evaluation of the offset resistance, according to the above measurement of the lowest fixing temperature, an unfixed image was formed using the above copier, the toner image was transferred and fixed using the above hot roller fixing apparatus. Then, a white transfer paper was fed into the hot roller fixing apparatus under the same conditions, and the appearance of toner staining the transfer paper was visually examined. This operation was repeated by gradually increasing the set temperature of the hot roller of the hot roller fixing apparatus. The lowest set temperature at which toner staining appeared on the transfer paper was taken as the temperature of offset appearance. Further, the environmental conditions were normal temperature and normal pressure (temperature = 22°C, relative humidity = 55%).

O: temperature of offset appearance ≥ 240°C
Δ: 240°C > temperature of offset appearance ≥ 220°C
×: 220°C > temperature of offset appearance

(3) Development durability

The development durability of the toner was evaluated by conducting continuous copying on the 100,000 sheets using a commercially available copier (Toshiba Corporation, Precio 5560), and examining the number of the sheets fed from the start to the time when the deterioration of the image concentration or the image quality began.

O: even 70,000 or more sheets not being deteriorated
Δ: 50,000 to 70,000 (not inclusive) sheets being deteriorated
×: 50,000 or less sheets being deteriorated

(4) Blocking resistance (preservability)

For the evaluation of the blocking resistance of the toner, a toner was allowed to stand under the environmental conditions of temperature = 50°C and relative humidity = 50% for 48 hours, 5 g of the resulting toner was placed on a 150-mesh sieve and vibrated for 1 minute using a powder tester of Micromeritics Laboratory, Hosokawa Micron Corporation with the scale of the variable resistor set at 3. The weight of the toner remaining on the 150-mesh sieve after the vibration was measured and a ratio of remaining weight was determined.

O: 20% > ratio of remaining weight
Δ: 35% ≥ ratio of remaining weight ≥ 20%
×: ratio of remaining weight > 35%

(Example of preparation of modified low-molecular-weight ethylene polymer (C-1))

300 g of the epoxidized low-molecular-weight ethylene polymer (B-1) and 36.5 g of adipic acid were added to a separable flask equipped with a stirrer, a thermometer, $N_2$ inlet and a condenser. The temperature of the resultant mixture was raised to 160°C under $N_2$ atmosphere, and 0.12 g of a 10% aqueous sodium hydroxide solution was added thereto. The mixture was allowed to react at a reaction temperature of 160°C for 6 to 9 hours, to obtain 318.3 g of a modified low-molecular-weight ethylene polymer (C-1).
By $^1$H-NMR measurement, it was confirmed that a peak based on the epoxy group was not observed.

(Preparation of resin dispersion 1)

The 5-liter, 4-necked flask was equipped with a reflux condenser, and a nitrogen gas inlet tube, a thermometer and a stirrer, 47.6 parts by mass of ion-exchange water, 37.0 parts by mass of styrene, 3.0 parts by mass of n-butyl

acrylate, 0.6 part by mass of acrylic acid, 2.4 parts by mass of dodecanethiol, 0.4 part by mass of carbon tetrabromide, and 4.0 parts by mass of Neopelex F-25 (manufactured by Kao Corp.), were charged thereinto. They were dispersed and emulsified in the flask, and into the mixture was charged 5.0 parts by mass of ion-exchange water having 0.4 part by mass of ammonium persulfate dissolved therein while mixing slowly them for 10 minutes, and then the flask was purged with nitrogen. While stirring the flask, emulsion polymerization was carried out at 70°C for 5 hours. Thus, a low-molecular-weight resin dispersion 1 having a central diameter of 155 nm, a glass transition temperature of 59°C and Mw of 12000 was obtained.

(Preparation of coloring agent dispersion)

20.0 parts by mass of carbon black (MA-100, manufactured by Mitsubishi Chemical Corporation), 5.0 parts by mass of Neopelex F-25 (manufactured by Kao Corp.), and 75.0 parts by mass of ion-exchange water were mixed, and dispersed with a ultrasonic cleaner W-113 manufactured by Honda Electronics Co., Ltd. at an oscillatory frequency of 28 kHz for 10 minutes, to obtain a coloring agent dispersion. The particle size distribution of this sample was measured using a particle size distribution measuring apparatus (LA-700 manufactured by Horiba, Ltd.). As a result, the volume average particle size was 150 nm, and the coarse particles of 1 μm were not observed.

(Preparation of release agent dispersion 1)

20.0 parts by mass of a modified low-molecular-weight ethylene polymer (B-1), 2.0 parts by mass of Neopelex F-25 (manufactured by Kao Corp.), and 77.0 parts by mass of ion-exchange water were heated at 140°C, emulsified at a discharge pressure of 560 $\times$ $10^5$ N/$m^2$ with a Gaulin homogenizer, and then rapidly cooled to obtain a release agent dispersion. This sample was measured using a particle size distribution measuring apparatus (LA-700 manufactured by Horiba, Ltd.). As a result, the volume average particle size was 140 nm, and the coarse particles of 0.8 μm or more were 5% or less.

(Preparation of release agent dispersion 2)

20.0 parts by mass of a low-molecular-weight ethylene polymer (A-1), 2.0 parts by mass of Neopelex F-25 (manufactured by Kao Corp.), and 77.0 parts by mass of ion-exchange water were heated at 140°C, emulsified at a discharge pressure of 560 $\times$ $10^5$ N/$m^2$ with a Gaulin homogenizer, and then rapidly cooled to obtain a release agent dispersion. This sample was measured using a particle size distribution measuring apparatus (LA-700 manufactured by Horiba, Ltd.). As a result, the volume average particle size was 365 nm, and the coarse particles of 1.0 μm or more were 13%.

[Example 4]

| | |
|---|---|
| Resin dispersion 1 | 180 g |
| Resin dispersion 2 | 80 g |
| Coloring agent dispersion | 30 g |
| Release agent dispersion 1 | 30 g |
| Sanisol B50 (manufactured by Kao Corp.) | 1.5 g |

The above materials were mixed and dispersed using a homomixer in the round flask, and then the flask was heated in a heating oil bath to 50°C while stirring the flask. After the resultant mixture was maintained at 50°C for 1 hour, it was confirmed that agglomerated particles of about 5.9 μm were generated upon observation by an optical microscope. Thereafter, 9.0 g of Neopelex F-25 was added thereto, and then the flask was closed, heated to 105°C while continuously stirring, and maintained for 3 hours. After the resultant toner was cooled, filtered, and sufficiently washed with ion-exchange water, and the particle size thereof was measured by means of a Coulter counter to yield a particle size of 6.0 μm. Then, 0.5 part by mass of a hydrophobic silica (R-972, manufactured by Nippon Aerosil Co., Ltd.) was externally added, based on 100 parts by mass the above toner, and then mixed by a Henschel mixer to obtain toner particles. The toner particles were measured for fixing property, offset resistance, development durability, and blocking resistance. The fixing property, the offset resistance, the development durability, and the blocking resistance were all good, which were rated as O.

[Comparative Example 2]

The same procedure as in Example 4 was carried out except that the release agent dispersion 1 was changed into the release agent dispersion 2, to obtain a toner with a particle size of 5.8 μm. The fixing property and the offset resistance were rated as O, but the development durability and the blocking resistance were rated as x.

## INDUSTRIAL APPLICABILITY

The epoxidized low-molecular-weight ethylene polymer according to the present invention is excellent in adhesiveness with various inks, coating materials, aluminum or other metals, or the like, and can be designed in a broader range of the epoxy group content. This allows a range in the molecular design so as to satisfy the required performance in accordance with applications.

In addition, the low-molecular-weight ethylene polymer as a raw material does not use an expensive monomer, and also in the modification of epoxidization, if limiting the method, thereby being economically favorable.

The release agent for a toner and the toner of the present invention are excellent in fixing property, offset resistance and development durability.

Therefore, the release agent for a toner and the toner of the present invention can sufficiently meet the recent increase in demands such as faster operations, a lower temperature fixation, or the like in a copier and a printer.

## Claims

1. An epoxidized low-molecular-weight ethylene polymer (B), which contains an epoxy group in the polymer chain of a low-molecular-weight ethylene polymer (A), and has

   (i) a density of 870 to 1,050 kg/$m^3$,
   (ii) a melting point of 70 to 130°C, and
   (iii) a number-average molecular weight (Mn) of 400 to 5,000.

2. The epoxidized low-molecular-weight ethylene polymer according to claim 1, which contains 80 to 99 mol% of the structural unit derived from ethylene.

3. The epoxidized low-molecular-weight ethylene polymer according to claim 1, wherein the epoxy group content is 30% to 100% of the total unsaturated bonds of the low-molecular-weight ethylene polymer (A),

4. The epoxidized low-molecular-weight ethylene polymer according to claim 1, wherein the molecular weight distribution (Mw/Mn) is 5.0 or less, and the penetration is 15 dmm or less.

5. The epoxidized low-molecular-weight ethylene polymer according to claim 1, wherein the low-molecular-weight ethylene polymer (A) comprises (a) a structural unit derived from ethylene and at least one diene, or (b) a structural unit derived from ethylene, at least one α-olefin selected from α-olefins having 3 to 12 carbon atoms and at least one diene.

6. The epoxidized low-molecular-weight ethylene polymer according to claim 5, wherein the diene is a diene in the branched structure.

7. The epoxidized low-molecular-weight ethylene polymer according to claim 5, wherein the diene is vinylnorbornene (5-vinylbicyclo[2,2,1]hept-2-ene), and

   (i)' the density is 900 to 1,050 kg/$m^3$, and
   (ii)' the melting point is 100 to 130°C.

8. The epoxidized low-molecular-weight ethylene polymer according to claim 1, which is obtained by reaction of the low-molecular-weight ethylene polymer (A) with hydrogen peroxide in the presence of a Group VI transition metal catalyst and a phase transfer catalyst.

9. The epoxidized low-molecular-weight ethylene polymer according to claim 1, wherein the low-molecular-weight ethylene polymer (A) is a polymer prepared by using a metallocene catalyst.

**10.** A release agent for an electrophotographic toner, which comprises a modified low-molecular-weight ethylene polymer (C) obtained from the epoxidized low-molecular-weight ethylene polymer (B) according to claim 1 and a carboxylic acid compound, and the toner having toner particles is obtained by suspending at least a polymerizable monomer, a coloring agent and said release agent in an aqueous dispersion medium and subjecting them to a suspension polymerization using a polymerization initiator.

**11.** An electrophotographic toner for developing an electrostatic charge image, which comprises a binder resin for a toner, a coloring agent, a release agent, and a modified low-molecular-weight ethylene polymer (C) obtained from the epoxidized low-molecular-weight ethylene polymer (B) according to claim 1 and a carboxylic acid compound.

**12.** The electrophotographic toner for developing an electrostatic charge image according to claim 11, which is prepared by the preparation process comprising at least the step of mixing a release agent dispersion having release agent particles dispersed therein.

**13.** The electrophotographic toner for developing an electrostatic charge image according to claim 11, which comprises 1 to 20 parts by mass of the modified low-molecular-weight ethylene compound (C) in the toner.

**14.** The electrophotographic toner for developing an electrostatic charge image according to claim 11, wherein the release agent is the release agent according to claim 10.

**INTERNATIONAL SEARCH REPORT**

International application No. PCT/JP2004/018012

A. CLASSIFICATION OF SUBJECT MATTER
Int.Cl$^7$ C08F8/08, G03G9/08

According to International Patent Classification (IPC) or to both national classification and IPC

B. FIELDS SEARCHED

Minimum documentation searched (classification system followed by classification symbols)
Int.Cl$^7$ C08F8/08, G03G9/08

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 4-4204 A (Japan Synthetic Rubber Co., Ltd.), 08 January, 1992 (08.01.92), Claims; page 2, lower left column, line 20 to page 3, lower left column, line 17; examples 1, 2, 4 (Family: none) | 1,3-9 |
| X | JP 4-55403 A (Nippon Maruzen Poriechiren Kabushiki Kaisha), 24 February, 1992 (24.02.92), Claims; page 2, lower right column, line 16 to page 4, upper left column, line 5; example 3 (Family: none) | 1-3,5,8-9 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 February, 2005 (25.02.05) | 05 April, 2005 (05.04.05) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2004/018012 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 43-26305 B (Uniroyal, Inc.), 12 November, 1968 (12.11.68), Claims; page 1, right column, line 34 to page 2, left column, line 2; page 4, left column, line 31 to right column, line 47; example 1 (Family: none) | 1-14 |
| A | JP 63-305104 A (Mitsui Sekiyu Kagaku Kabushiki Kaisha), 13 December, 1988 (13.12.88), Claims; page 4, lower left column, line 5 to page 5, upper left column, line 7 & EP 295026 A2 & US 4981605 A | 1-14 |
| A | JP 9-77823 A (Mitsui Sekiyu Kagaku Kabushiki Kaisha), 25 March, 1997 (25.03.97), Claims; Par. No. [0016] (Family: none) | 1-14 |
| A | JP 49-13292 A (Esso Research and Engineering Co.), 05 February, 1974 (05.02.74), Claims & DE 2312874 C2 & GB 1390743 A & FR 2179745 A5 | 1-14 |
| A | JP 4-20505 A (Mitsubishi Petrochemical Co., Ltd.), 24 January, 1992 (24.01.92), Claims; page 3, upper left column, lines 6 to 10 (Family: none) | 1-14 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7091338 B
- JP 2001002731 A
- JP 2003073412 A
- JP 49065232 A
- JP 56087051 A
- JP 63282749 A
- JP 6250439 A
- JP 4268307 A